# EUROPEAN PATENT APPLICATION

(11) **EP 2 963 593 A1**
(43) Date of publication of application: **06.01.2016**
(21) Application number: 15174526.2
(22) Date of filing: 30.06.2015
(51) Int. Cl.: G06Q 10/00

(54) **METHOD FOR THE CLASSIFICATION, CATALOGING AND TRACKING OF VALUABLE ASSETS, IN PARTICULAR WORKS OF ART WORLD**

(30) Priority: 02.07.2014 EP 14175469
(71) Applicant: Penco, Sara, 00189 Roma (IT)
(72) Inventor: Penco, Sara, 00189 Roma (IT)
(74) Representative: Botti, Mario

(57) **Abstract**

The invention concerns a method for the classification, cataloging and tracking of goods of value, in particular, works of art, the type in which there is an initial stage of access to each individual work to be classified and the collection of information on characteristics of the work.

The method is articulated in a series of steps, in order:
- Define the characteristics of the work under examination as enunciate;
- Elaborate such enunciates to confer them an ordering;
- Assign to each enunciate a classification and / or a category of belonging;
- Group and merge the enunciates that belong to the same classification and / or category of belonging between themselves, with the definition of an axiom;
- Define areas of compatibility of these axioms with further definition of correlations and / or relational pointers between the axioms;
- Storing enunciates, axioms and their relational pointers in a storage media accessible by electronic means;
- Prepare parameters and instruments of computerized research that enable computer to retrieve automatically information regarding the work of interest.

## Description

### Field of application

The present invention refers to a method for the classification, cataloging and tracking of valuable assets, in particular, but not exclusively, works of art world.

The method according to the invention represents an innovative method in charge of the classification and cataloging of valuable assets in general.

The invention aims to set an hermeneutic order in the disorder of the information that populate a given topic which we will call, further on this document: the "Discourse".

The innovative content of the method arises as a contribution which can help overcome the limits of the known solutions, which preclude the recovery of a conscious and proven knowledge; to which, instead, it is possible to reach through the identification of a new type of rationality that proves to be a simplification of processes and is responsible for the pursuit of its multiple effects.

In this document the invention will be illustrated by facing the "Discourse" of the classification and cataloging of assets in the world of science of art.

Fundamental premise of this document is to demonstrate not only the reliability and dependability of the innovative content of this method, but also the synergies and the aspired products that derive.

The inductive, deductive and empirical logic of the processes, will characterize the description of each operational phase of the project. This will make it easier to explain how you elaborate processes throughout their path; the method by which you can track, organize and order information; and also how you can identify and analyze the processes that derive thanks to the sorting of the same information.

In order to talk about a reliable "method", every "theoretical" process has been faced and verified through the concrete application of theoretical processes; which takes place thanks to the realization of an embryo of the project: which means a "functional prototype" of the method according to the invention.

The "practical phase" has allowed us to objectively deal with all the "criticality": not only the foreseeable ones, but also the unforeseen that derive from the effective implementation of the theoretical processes designed to manage the complexities..

Thanks to this verification it has been possible to prove the reliability of the solutions in charge of solving them and to allow a first "validation" of the results obtained.

The method according to the invention is not meant to be just a theoretical model but a practical and proven method so it is necessary to keep in mind that the computer devices that will be mentioned, of every kind and nature, represent the accessory tool to witness the process of validation of the method according to the invention, but they only represent an accessory means finalized to its fruition.

### Known Art

Since the dawn of human evolution, he demonstrated his innate as well as natural ambition of knowledge, which has determined his gradual evolution and has led him towards a higher degree of dominance over other species and towards the achievement of civilization.

He learned to defend himself, to search for food, to satisfy the intense curiosity as exploring new places and, above all, as an investigation of the surrounding reality.

His ambition, however, did not stop at this, since it has generated in him the need to express his knowledge and to make it both known as tangible.

This process has evolved over the centuries, giving rise to a huge amount of artifacts of art and to a variety of artistic creations that, today, are the heritage of humanity.

But the art sector is also one of the most crucial since its own immense quantity, and the thematic variety, manufacturing, cultural and social, preclude the detailed knowledge and therefore the use, preservation and protection.

The enormous difficulties in managing the immense and varied cultural heritage and concrete difficulties involved in obtaining historical information related to it, irreparably penalizes the enormous efforts of workers in the sector and, for this reason, the knowledge remains largely confined to one specific field; to which it is inhibited or precluded the use in a complex global context.

In fact, also the work of an art expert is subject not only to the distinct skills of each person, but also to a variety of "activities" dedicated to a specific and limited topic, subject, geographical location, historical period and / or cultural period; also due to the different environmental locations of the assets and their multiple features.

The consequence is not only in the fact that the product of the valuable work of the experts is hardly usable in the complex context of Culture Heritage, but also that this current situation precludes the identification and realization of appropriate solutions to deal with the "criticality" some of which already highlighted and generated by four main factors.

The first factor is identified in the nature of the sector itself. The vast number and variety of cultural heritage generates a series of problems, some of which, still unmanageable today, make it a highly neuralgic field : in storage, cataloging, census, knowledge, usability, development, security, etc.

In the current state the fact of being able to store and to relate works of art made in different historical periods and different types of manufacturers, but depicting the same subject, is still precluded. In art there is no tool that can create all the interrelations, in space and time and in its different manufacturing types, "hinc and nunc", which can provide an understanding of the cultural heritage in its entirety. Until today the only available are implemented capacities with reductionism methods unlike what instead it is proposed to do with the method according to the invention through the complex and anti-reductionist analysis of cultural heritage.

The current limits are translated into a series of "criticality" and in the current impossibility to remedy ; for this reason the art sector is considered one of the most crucial sectors.

The method according to the invention is based on the Cartesian path which attests as also the one who is going to face extensive studies, is forced to become aware, in a Socratic path, of how complex is the pursuit of true knowledge.

As described by G. Berchelard in his book " Epistemological acts and thresholds" and as reflected in Michel Foucault "'archeology of knowledge", the interruptions, which have very different statute and nature, "... stop the indefinite accumulation of knowledge, break their slow maturation and bring them into a new time, they are released from their empirical origin and their initial motivations, to be purified from their imaginary complicity; thereby they prescribe to the historical analysis no longer the search of the silent beginnings, no longer the endless ascent towards the first precursors, but the identification of a new type of rationality and its multiple effects... ".

And again Michel Foucault points out the limits of the "state of the technique" and deals with the issue when he quotes G. Canguilhem: "... displacements and transformations of concepts: analysis of G. Canguilhem may serve as models; they demonstrate how the history of a concept is not, in every way, that of its progressive refinement, of its continuously increasing rationality, of its gradient of abstraction, but of its various fields of constitution and validity, of its subsequent rules of use, of the multiple theoretical environments in which its development is conducted and completed... ".

The limitations of the actual technique are fully explained in the text "The Cultural Heritage and their classification", which explains how the most famous iconographic catalog systems, known as "Iconclass" and "Thesaurus Iconographique", "... allow to identify the work of art from an aesthetic and didactic point of view, but they do not allow to place in time the images that have changed their iconographic typology... ".

The author of the book proves this "limit of the state of technique" through an example on the iconography of Saint Sebastian.

"... In the iconography of the origins, the Saint is represented as the soldier whose 'legend' said that he was covered with an armor. Instead from the fourteenth century he is portrayed as a young man not much dressed, and the target of arrows. " "... Iconclass does not allow to track this distinction...".

(L. Conti, 2003, "Cultural Heritage and their classification" (Rome, Bruno Mondadori Editore), ch. 6 "structured vocabulary", p. 139.

The limit of the "state of the art" in order to identify the subject depicted, is as if we had two different saints: that is, two distinct iconographic cards.

The ordering of the database described above, even though it is the same iconographic subject, is limited by: the variations of the iconographic representation in time and geographical regions preclude the accurate identification of the person depicted.

San Sebastian "in armor" (iconography prior to the fourteenth century) is not "associated" to San Sebastian as a " young man not much dressed and target of arrows" (iconography posterior to the fourteenth century).

The method represents a scientific solution through which we can capture, in all its breadth (everything that exists in the art), the issue of truth in the World of Cultural Heritage; through a methodical approach both ordered and organized, as well as "... designed to restrict the amplitude of vagueness, whose expression is the concept of objectivity and the idea that only what is objectively evaluated can become the object of scientific knowledge..." (Hans Gorge Godamer "Truth and Method").

The method according to the invention is an effective and efficient scientific procedure; it is capable of generating "aspired results " compared to the state of the current technique and through its continuous verification and validation, represents an innovative starting point to deal and manage the complexities and criticality.

The object of the method, therefore, is not and does not want to be an absolute truth, but intends to be a contribution that aims to reach a better comprehension; which is not based on a generic discourse but on a concrete and validated scientific method, which is applied to complex systems and unordered information (since some aspired results, but not the method, have already been evaluated and validated by experts).

The invention represents the process for the reconstruction, and therefore also for the corresponding integration of the information and the tools, more or less complex and fragmented, through all their possible and relevant connections; the way to deal with uncertainty, conflicts and logical and empirical insufficiencies.

The different elements, combined together, contribute to elevate the development of the method to a higher level by enabling processes, services and innovative applications.

The aim is to improve the organization of knowledge and to pursue the benefits that can be obtained. The definition of "method" corresponds to a set of processes acting to pursue a goal.

The method according to the invention is the instrument which, thanks to its innovative contents tested through a functional prototype applied to art, aims to pursue those "aspired results" that are precluded in the "current state of art",

It is a scientific method because it carries out the typical modality through which science plans strategies to achieve knowledge of objective, reliable, verifiable and shareable reality.

In the history of literature a large amount of systems have proliferated which, although based on methods that aim at the storage and the historical-cultural reconstruction in its most varied sectors and arguments, none of these methods, until today, is based on a complex and profound analysis; if we want to track, underline and face the discontinuities, the criticalities and all the interrelationships of a broad discussion.

This method allows to put order between the different information that populate the field of art and, above all, allows you to give birth to the discontinuities and to manage them so that they become statements: This transforms the current "criticalities" in that aspired product, currently precluded, that generates knowledge.

The method according to the invention aims to create all possible connections in order to identify concepts, enunciates, which may be able to shape those discourses that allow us to better understand the works of art.

This target leads necessarily to the planning of a methodology that can assimilate the processes that will allow, subsequently, the implementation of hardware and software systems, that in the state of art, do not exist. They would not only improve the "performances" in the fields of education and training, but also allow to create the iconographic support to the people involved in the critical and validation of this field.

The invention wants to prove that it is only on the basis of these assumptions that the process of actual comprehension can start and move onto the level of knowledge currently precluded.

As a matter of fact, the method also allows to explore and realize the theoretical concept expressed by historians, philosophers and hermeneutics.

Therefore the method according to the invention not only takes part in the process of growth, communication and interpretation of art itself, but also permits to validate what the great philosophers and experts, through their works, wanted to transmit.

In this sense we can affirm that the method according to the invention represents the validation of the method as a result of the invention, and also the confirmation of what has been stated by philosophers and experts because the art of comprehension represents a contribution to the history of knowledge even towards those people who created these treaties and have provided an epochal contribution, hoping to release and free the interpretation of the humanitarian sciences from the use of simplistic knowledge.

This step is crucial to understand the importance of what, in the past, was written and interpreted in order to re-approve the knowledge that represents the reason for the existence and the expression of the artifact: in a backwards analysis to reconstruct the origins of the product itself.

This method, unlike what has been done till today by philosophers as Foucault, is not limited to underline the criticality, but has created a real, clear and sequential methodology that also allows the implementation.

It consolidates what they have already written, it aims to underline the questions, to identify the "criticalities" (discontinuities, inhomogeneities, implications, interruptions, diffraction points, uncertainties); to develop strategies that are able to provide clear, sequential and implementable methodological solutions methodological; accompanying the entire discourse through empirical and practical examples that make concrete and tangible how and why the method is reliable, effective and dependable: namely valid.

There are known solutions to accompany the works of art with traceability markers. For example, a known solution is described in US patent application No. 2004/0044596 A1 which describes an identification system based on the so-called TAG that is put on the back of a work of art with an adhesive , or in a not immediately visible point, to allow to trace in another moment the work and its identification, utilizing a proximity reader.

Although it can result advantageous in some ways, this solution is limited to the cataloguing of the work but does not solve the problems inherent to the analysis of the work of art and the collection of all the information that can be deduced from the work itself or the context in which it was retrieved , traced or identified.

Another known technical solution is described in European patent application No. EP 2 237 347 A1 that explains a system of certification of the works of art based on paper documentation and anti counterfeiting cards whose data are also stored on an electronic database. This solution simply worries to twin paper-based data related to a work of art with electronic ones present in the database in order to ensure traceability of the work and its authentication.

Also in this case no mention is made of all the problems inherent in the analysis of the work of art and the gathering of all the information that can be derive from the work itself or the context in which it was retrieved, traced or identified.

The technical problem that lies behind this invention is to provide a new method for the classification, cataloging and tracking of valuable assets, in particular works of art, that has functional characteristics in order to enable a rapid identification of the work also allowing to make structurally repetitive and scientifically objective all the phases in charge of the analysis of the work of art and the gathering of all the information that can derive from the work itself or the context in which it was retrieved, traced or identified.

The method according to the present invention consists both in the gathering of empirical evidence through experimental observation of the information and strategies (until it achieves the enunciates and the rules to handle them, so that they become reliable, dependable, accurate and validated); both in the formulation of hypotheses and theories that represent responsible solutions to address the discontinuity, the critical issues that are submitted to the experiment to test the effectiveness and to improve processes continuously.

Although also an abstract method can be considered scientific, however, it would assume the form of a set of criteria (theoretical but also operational) on the basis of which a result, theoretical or experimental, can be considered as effectively scientific but, as tested by the method according to the invention, its effectiveness and reliability cannot be proven and, therefore, cannot be validated.

In particular it would be a problem of demarcation, since we would evade the criteria that allows us to distinguish a scientific discourse from a metaphysical, religious or pseudoscientific discourse.

### Summary of the Invention

Through the method according to the invention we intend to support and demonstrate how the scientific method is actually the systematic, monitored, empirical and critical study not only of hypotheses about relationships between various phenomena, but also the classification and cataloging of goods that encounter during innovation processes; about their solutions and their validation process. For this reason, before proceeding with the illustration of the operational steps of the method, it is necessary to face all the complexities, by listing the designations and defining the rules by which the method according to the invention faces and manages them to arrive at knowledge.

It is therefore important that the method is able to determine what are the enunciates, from where they come from, which is their formation process, their system of axioms and rules that will allow them assume their capacities that will generate functions enunciatively. It will be necessary to deal with the discontinuity, complexity and points of diffraction; determine what are the categories and the constituent branches, within which enunciates of different nature and status can interact with each other, generating correlations and aspired results.

The logic of the method according to the invention aims on one hand to support and prove the truthfulness of what Popper says: that it is not possible to draw with certainty to the knowledge of the external world only through an inductive logic and therefore ignoring the distortions that arise from the discontinuity (state of technique or of art); on the other hand, the method according to the invention intends to place the bases to demonstrate that the time is right for "stepping forward"

(innovation) compared to the statements of the same Popper, when he asserts that we can only see what our mind produces and that a theory can be submitted to effective control and defined scientific only if formulated in advance in deductive form. He also states that the peculiarity of the scientific method is the ability to falsify it, not the presumption to "verify" it.

On the basis of these ideas of solution, the invention solves the above-mentioned technical problem with a method for the classification and cataloging of valuable assets, in particular, works of art, for a subsequent traceability of the asset, providing an initial access phase for each individual work that needs to be classified and the gathering of information regarding the characteristics of the work, providing the following steps:
- determining the characteristics of the work under consideration in the form of enunciate;
- processing such enunciates to give them an order;
- assigning to each enunciate a classification and / or a category;
- merging and assemble the enunciates that belong to the same classification and / or category, with the definition of an axiom;
- determining areas of compatibility of these axioms with further definition of correlations and / or relational pointers between the axioms;
- storing enunciates, axioms and their relational pointers in a storage media accessible by electronic means;
- providing parameters and research instruments that allow to retrieve automatically the information regarding the work of interest.

Advantageously, before the phase of determining the areas of compatibility, also the collection of images, inscriptions or fragments of enunciates relevant to the given work of art, are optionally provided.

In addition, it is noteworthy that enunciates include at least five constituent branches divided thematically as follows:
- Historical iconographic;
- Historical archives;
- Documentary;
- chemical diagnostic;
- illustrative.

Each of these above-mentioned constituent branches may include a plurality of sub-categories.

All the information obtained by implementing the steps of the method are reported in the same record card attributable to a given work of art.

Further characteristics and advantages of the method according to the invention will result from the description of an example of embodiment given by way of indication and not of limitation with reference to the accompanying drawings.

### Brief Description of the Drawings

- Figure 1 shows a schematic view of a flow diagram illustrating the operational steps of the method of the present invention;
- Figure 2 shows a schematic view with further details of some of the steps of the method according to the invention;
- Figure 3 shows a schematic view of further steps of the method according to the invention;
- Figure 4 shows a photographic representation about a work of art, in particular a painting;
- Figure 5 shows a further photographic representation of a detail of the painting of figure 5.
- Figures 6 and 7 show respective photographic representation of works of art with similar content or with which it can be confused that are handled by the method of the present invention.

### Detailed Description

With reference to the above figures, an indicative and not limitative example of the method of the present invention will now be described, intended to the classification, cataloging and storage of the peculiar characteristics of goods and works of value, in particular but not exclusively belonging to the world of science art.

The method assumes the availability to access to works of art and general valuable assets that require at first a clear and precise definition of all their peculiar characteristics to be easily identified, classified, cataloged and finally maintained both at the level of physical preservation of the works itself both at the level of preservation and usability of all information of relevance to them.

In this regard, it is necessary to keep in mind, in the state of the art, that the discovery itself and the formulation of its issues determine the characteristics of the artwork that represent an expression of the first responses to order chaos; therefore its enunciates and their subordination.

The peculiarity of the processes of the method is subjected to a first check precisely through the functioning of the prototype of the method according to the invention that, during the processes, generates adaptively further questions, possible responses and new enunciates; to determine not only the reliability and the practical correspondence of the theoretical enunciates, but also arising as the embryo of a project that also acts as a prototype to test the coherence of the processes, to point out any problems, to enable the identification of effective solutions in order to prove again the reliability.

It is an ever-changing process that, through the basis of a proven method, is able to trace the nature of the different issues and to identify the solutions responsible of a clever growth and that leans forward towards the constant evolution of the state of the current technique (of course this "cycle" foresees that the results of the processes will have to be subjected to the validation of the experts).

Dealing concretely with all the theoretical problems has allowed to bring out all the criticality, the discontinuity, the unevenness, the effects of the disruptions and points of diffraction, that it would have never been possible to identify planning only a strategy of method: both because of a lack of practical experience, both by reason of the fact that innovation implies, obviously, a considerable amount of situations impossible to point out previously; but only during construction.

The invention is based on the ability to undertake long and complex investigations of the emergency system of the objects, of the appearance of the enunciates and, more generally, intends to point out simple, effective and efficient, solutions, in order to handle the problems and complexities.

In fact, each process of the method according to the invention will be joined by practical exemplification that represents the result of the functioning of the tangible prototype.

The method presents a methodical and repetitive nature, since it has to generate compatibility between enunciates and processes, therefore below some general rules are defined.

We first examine the sources of information that can help start a learning phase based on reliable sources within which we can find the information that can become enunciates.

Among these, we denote as examples: historical documents, expert studies, images, diagnostic results, video, hearsay, sacred historical sources (for example, the Bible, the Gospels, etc.), profane historical sources (for example mythology, Iliad, Odyssey, etc.), inscriptions (in Latin, Greek, etc.); publications and texts regarding historical archives, chemical, documentary and illustrative information.

They are reliable because they represent a discontinuous but proven historical source. Or rather because they represent documents that have already undergone a process of verification and validation by the experts.

Naturally it is impossible to list all reliable sources, but the selection is made according to a proven logic that is perceived through the following examples, which are responsible to support the theoretical explanation and to illustrate the practical functioning of the method.

Here we will just mention the logic by which it is possible to select the sources and information.

The source which generated the depiction of a narration (Mythology has originated the depictions specifically narrated in it); an event from which the discontinuity derives(as determined during a Council, the consuetude iconography changes, or "books of accounts" of the artists, ancient texts such as the "Lives" of Vasari, where he describes the existence of a artifact and also important information related to it, such as dating, commissions, payments, or the depletion of a given mineral that comes from a mine run out etc.

The different steps of the method will be illustrated through an logical path, starting from the identification of the basic information, unto generating enunciates and rules to manage them.

### 1) Inductive Logic

For inductive logic we intend the initial assumption, namely the ability to capture and comprehend the general principles that are expressed, implicitly, within the "reliable sources".

These general principles derive from the observation of the expressed and / or narrated facts contained in the sources and that allow to arrive to the formulation of hypotheses that give a general logic meaning to the concept expressed in them.

They assume the research and identification logic of all the reasons from which a phenomenon derives or does not derive: in time and in space; from the conditions that determine it to its level of importance.

All the data obtained from this survey will represent the starting point to formulate a first sorting and ordering of the information that, for the method according to the invention, represent what we will call " rough enunciates".

They will be submitted to a further deductive process and, thereafter, to an empirical elaboration.

The latter will represent the completion of the elaboration process of the information collected and their transformation into "enunciates".

And only at this point it will be possible to proceed with the verification of the pertinence and accuracy of the processes themselves.

The verification of the information and of the processes also represents the essential and indispensable assumption for the validation of the method.

### 2) Deductive Logic

Deductive reasoning derives from the first ordering of the theoretical general principles as a result of inductive research and their subsequent review.

These are concepts that are the result of deductions that, even if granted, allow and represent the instrument to retrieve the rules and conditions that generated them and to which they belong.

We can affirm that the "rough enunciates" represent the premise from which the deductions derive: the logical consequences.

The process of deductive logic represents the premise to understand the "discourse" and to deal with the "complexity": the "discontinuity", the "points of diffraction", the "associated fields", the "correlations", the verification of the truth, verification and validation of the contents and processes and to identify the responsible solution to manage all the "critical": that is to elaborate the empirical process.

### 3) Empirical process

The empirical process, in scientific terms, is usually associated with experimentation.

The term semi empirical, in fact, is used to qualify theoretical methods that partly rely on basic axioms or postulated scientific laws and partly on the experimental results.

These methods are placed in contrast with the theoretical methods "ab initio", which are purely deductive and based only on the general principles of the inductive logic phase.

The processes of the method according to the invention are developed on a logical deductive and inductive route in order to face a deep empirical elaboration, because only through the empirical process the method achieves the scientific foundations necessary to ensure the existence of invention and innovation.

At last, it is only through practical experimentation and not just theoretical, that it will be possible to deal with the problems that derive as obstacles to the pursuit of the objective (that is the definition of the method) and that determine an impartial and neutral scientific experimentation; and the premises to verify if the theoretical method is really reliable (paragraph reference "Assumptions of the scientific method" and the theory of Popper).

In fact, the method according to the invention is based on the fact that the time is ripe to become aware of a new dimension, which may ensure the attainment of aspired results and, therefore, harbingers of a social and cultural progress.

The awareness of the efforts made by the experts and the simultaneous continuation of the "critical", reveals the need of having to take a step forward compared to the gradual theoretical development that continues to pose limits and obstacles.

In other words a "method" must assume a character of renewal that leads experts to obtain the benefits that, in the previous theoretical scheme, were foreclosed. It must induce him to become aware of being able to arrive at that "constructivism," which implies the knowledge of truth: accomplished and made implementable in time and space.

Advantageously, according to the invention, the method is based on a discursive formation that represents the identification, the encoding, the study, the interpretation of hermeneutics art.

This means that first it is necessary to recover all the rules of discursive formation that have been lost through the course of history and that, however, have never been ordered and organized.

This path will have to face many difficulties of various kinds, because it will be necessary to achieve a sorting that is able to allow that all the information, even though different from each other, assumes the same form within the language.

All the information will become enunciates and will have to respond to the rules imposed by a common "grammar of art"; that will result in the subordination to a series of rules that make them readable all within a single method.

The discursive formation originates from the sorting and the organization of an alphabet (enunciates) and of rules that are able to structure a sentence and a proposition grammatically correct (functioning specifics described in stage six) until the "aspired product" is obtained (recovery of the information and enhancement of the assets) and reliable (proven and validated).

The grammatical analysis of language is based on a limited number of concepts of which both the content and the use are established, once for all: the concept of judgment (the general and normative form of each sentence), the concept of subject and attribute, grouped under the more general category of name, the concept of the verb, used as Copula logic, the concept of the word as representation and so on until the conceptual architecture of iconography or all the other information is reconstructed. For us, this architecture is the grammar of art that is applied together with the constant appearance of other concepts (sorted within the constituent branches of enunciates and their different fields of incorporation).

The method according to the invention thus serves to "recover" all information concerning an artifact of art, based on the proven, organized knowledge consolidated and usable in its contents.

One of the most important peculiarities of the method is that we can benefit of it starting from a "non-knowledge"; and arriving to a "knowledge" through the processes according to the invention.

We need to analyze two points of view: the first is the one that corresponds to the creation of this method (which brings with it the management of knowledge); the second corresponds to the point of view of an external that is going to benefit from it (who will use the method to retrieve that information that will determine the knowledge of the artifact under examination).

The grammatical analysis of the discourse actually provides two different grammatical analyzes. When we fulfill a grammatical analysis, the subject may vary and it depends on the sentence construction.

In the method here described, if you know the phrase (that is to say that you know that given work of art), we will proceed with the grammatical analysis of its contents and the verification of the correct construction of the sentence itself (verification and validation). In the second case, instead, we reverse the construction of the phrase and we must proceed to recover the grammar rules in order to reformulate the discourse. The two hypothesis are:
A) the method according to the invention is named "Smarticon" and is the subject. In this document, its processes are described: namely how to organize knowledge and how to deal with the problems to make the method function.

Therefore, utilizing the method according to the invention, after collecting the disordered information, it is possible to proceed with their gradual sorting, up to organizing sentences and even their grammatical structure: therefore the method represents a source of knowledge itself.

In fact, the present description represents the illustration of the method, therefore, we can state that the method according to the invention and its contents represent the subject of the sentence. Here we fin ourselves in an observation point that is placed within the processes. We are starting from a methodical sort to give shape to a language and obtain linguistic knowledge: we start from a "knowledge" that must be ordered and elaborated, but we know how to recruit the information and how to organize the method. Therefore we can assume that:
Subject: Smarticon: the knowledge.

Discourse = all information related to a discourse (the general principles which flow from the logical inductive path), are subjected to a first order and divided into areas of belonging (with its related sets and subsets): these are rough enunciates. These last ones will now follow a process of deductive logic, generating logical consequences.

Rough enunciates and logical consequences will be elaborated in order to become a series of enunciates that in the end will be sorted within the axioms of relevance (that is the list of enunciates attributable to a discourse, ordered by sets and subsets). From here all the enunciates will become manageable and accessible through the method. The aspired results derive from their interaction. Discursive formation = it represents the series of hypotheses that derive from all the relations generated by the enunciates and their functions enunciatively.

Aspired asset = realization of the method according to the invention and objective possibility to prove the innovative content of the method. B) the method according to the invention has already been realized and it is ready to be used.

At this point the subject is no longer the method, but the user who has to utilize it to encode an artifact of which he does not know anything. He makes use of the method according to the invention: that is to say that the instrument created to question the story conversely and rediscovering to the lost knowledge.

The subject will therefore be the user who aims to understand what is his artifact of art: namely to encode the "unknown" discourse. The instrument (the verb), is the method according to the invention which, through its processes, will reach the encoding of the asset; of the discursive formation represented in the artifact; of the identification of new enunciates that, in the end, will return to implement the method from step 1 and everything will start over again.

Subject. The user who wants to encode an unidentified asset (not knowledge):
Discourse = artifact of art to be codified.
Discursive formation = what is observed in the artifact.
Aspired product = encoding of the asset, knowledge, development of new enunciates to be included in the method starting from stage 1.

In other words, the method can be applied to an artifact that needs to be codified when it has enunciates and rules to handle them; since the method has been realized, it handles them in an ordered and functional process and therefore all processes are conclude and start again share implementing constantly.

At this point the knowledge we have gained and of which we can dispose, because available through the method, allows us to apply it to tangible objects and to truly and objectively interpret hermeneutics of art in artifacts that we do not know: activating the continuous process of the discovery of the truth. Only then we will obtain additional enunciates and aspired results: the knowledge of what we are examining.

This knowledge will once again implement the method.

Now we will examine in greater detail what we mean for enunciates. As enunciates we intend all the "series" of information that represent the means by which we will elaborate the processes and thanks to which it will be possible to obtain further enunciates and / or aspired products.

The enunciate plays an indispensable role, since it does not represent a "unit" for its own sake, but the cardinal point from which all processes originate , the validation of their truthfulness, the knowledge that flows from it, the consequences, results and aspired results: the discourse.

The enunciates exert a vertical function compared to a multitude of different units or signs.

For different units we intend, for example, all the different types of information originally uneven and disorderly among them, such as those that are generated in each of the different constituent branches of the enunciates (see Phase 2 of the method) but which, at the end of the processes become ordered enunciates, manageable, reliable, harmonized with each other and therefore usable in the method according to the invention.

The constituent fields are those areas in which the enunciates are generated that derive from a given type or the nature of the information (iconographic, historical archives, chemical, documentary, Illustrative). In each of these branches the in homogeneities related to that kind of information are managed, as long as these last ones do not become compatible with those contained in the other constituent branches.

During this process some functions of intuition and analysis will be identified and defined, they will be part of the logic of the method according to the invention and which will improve and complete the process (see Step 6 of the method).

A series of signs will become enunciated provided that they will indulge a specific relationship not only with itself, but with other enunciates, with their causes or with the other elements related to it.

The enunciates of the method according to the invention confirm a question of Foucault. He asserts: "... I believe that it can be demonstrated that the relationship between the enunciate and what is stated is not overlapped to any of these reports. The enunciate, although it is reduced to a nominal syntagma ("The boat!)", Even if it reduces to a proper name ("Peter"), it has not, towards what it enunciates, the same relationship that the name has with what it designates. The name is a linguistic element that may accompany various positions within grammatical sets: its meaning is defined by the rules of use... (page 118) (references recovered also in the chapter that follows: "diffraction points").

Confirming what Foucault stated, all enunciates of the method according to the invention exist regardless of the possibilities of reappearance and the relationship that they assume compared to what they enunciate is not identical to a set of rules of use.

Enunciates and functions fulfill the task of establishing, in case of a plurality of data, if there is or there is not a bond, if the process is reliable and truthful, if there are consequences and which of them, if their formulation leads to rediscover of important elements enclosed and connected to the artifact of art: what is the artifact, to what era or geographical area it may belong to, if there are many different types of correlations and which ones (not only between enunciates, but also between different eras and geographical areas or between different artifacts of art that would have never been related and that, instead, they are absolutely coincident because copies of a prototype, or the identification of copies identifies a lost prototype, or sketches of a final artwork and much more information), or of deductions and other important elements that are described in the numbered steps that follow and in the benefits. Essentially, therefore, the enunciates derives from the logical deductive, inductive and empirical process proper of the method according to the invention and results in the instrument suitable to transform the in homogeneity and disorder in homogeneity and order.

Therefore, through its structural criteria, it establishes a "statute material" able to relate to others and to create new enunciates. Its function is to encounter a range of structures and units giving life to relationships enunciatively, in correlations and to make appear structural criteria and concrete concepts in time and space.

The reason of the existence of the enunciate is fundamental in order to state whether a phrase, a sentence, an act of language exists or not and also to establish the truth of the discourse.

The enunciate is not a structure, but a real function of existence that belongs to the signs from which we will be able to decrypt even logical analysis and its testing, but it will also be possible to identify under what rules the functions of existence succeed and overlap the enunciates and if they are harbingers of the identification of new enunciates.

The property of the enunciates is to have a function which makes it suitable and compatible to meet a range of structures and units and that makes them appear with concrete contents, in time and space.

On the base of these rules established in this paragraph, in the subsequent phases of the method, we will widely describe the way to formulate enunciates, through practical examples; the method to manage the discontinuities and how these represent a fundamental prerequisite not only to generate new enunciates, but also to place them in relation and correlation between them, or to highlight conflicts.

In addition, the properties of the enunciates produced and the results that they generate are described, as well as their properties during operation, their conditions, the rules that control the functions and their fields of operation.

As a result of the ordering and homogenization of the enunciates, all the critical issues, eventual discontinuities and contradictions will be discovered. This is a first result which is fundamental in the process.

In the stages of the method we will describe in detail all of these functions, the rules that control them and the fields in which they will be applied.

However, since the method is an innovative instrument, in charge of pursuing order and knowledge; the rules responsible to deal and manage the "criticalities" proffer as repetitive processes, because their methodical will generate enunciates giving them the properties enunciatively that will allow us to pursue the aspired targets.

Now we will analyze in detail on which steps Smarticon is articulated. Below we will describe the steps and the rules proper of the method, which are in charge to deal and handle situations and "criticalities"; assuming that all of the information, even if in different form and nature, will have to generate enunciates that can establish relationships enunciatively.

Because of this demand for uniformity and relatedness, the processes must necessarily be repetitive and methodical, so that all in homogeneities will be addressed in a path of common logic.

The method will make all enunciates and processes, compatible with each other and able to generate other enunciates and knowledge.

We will start from the path of formation of the enunciates and, little by little, we will point out and deal with all the unexpected, we will evaluate the origin, nature, hostilities and solutions in charge of pursuing our goal.

Each concept and relative classification and cataloging of goods linked to it, will be accompanied by practical examples, that derive from the functional logic of the prototype of the method according to the invention.

From these assumptions it will be possible to verify the reliability of the method and proceed with its validation.

The formation of the enunciates is articulated into a sequence of operational steps.Here below we refer to the index of the sequences for the formation of enunciates (see also the chapter regarding the steps of the method):
- Step 1. Construction of the input area: identification of the reliable sources and the collection of the information;
- Step 2. Construction of the area of rough enunciates: gathering of the disordered information and elaboration of a first order;
- Step 3. Construction of the areas of collection of autonomous enunciates: the process of planning and elaboration of the encode of the rough enunciates;

Step 4. Construction of the areas of structured collection of structured enunciates: the process of planning and elaboration of the encode of autonomous enunciates, to which are associated further enunciates and / or information. The formation of the axiom;
- Step 5 Constitution of the area of the "Inscriptions";
- Step 6. Construction of the areas of compatibility of enunciates.

In more detail:
Step 1. Construction of the input area: identifying reliable sources and information gathering. identification of the reliable sources and the collection of the information.

We have already mentioned the fact that, in the first place, multiple and varied reliable sources are individuated, inside of which the process of research, identification and extraction of information that derive from discursive contexts will begin.

Step 2. Construction of the area of rough enunciates: gathering of the disordered information and elaboration of a first order.

The collection of input information, still disordered, will create "rough enunciates".

Their elaboration consists in the analysis and identification of their nature and structure.

In this way we initiate a process that permits to become aware of the information and how these "rough enunciates", can be processed; how and why the logical and empirical process is identified and is suitable to codify them and to give them an order, coordination and overall coherence: a first knowledge that we can identify as the "family of concepts".

That is to say that a first order that derives from the beginning of "awareness and knowledge" and as well as the awareness of the properties and potentiality of the enunciates.

Step 3. Construction of the areas of collection of autonomous enunciates: the process of planning and elaboration of the encode of the rough enunciates;

The collection of independent data (data available to all but disordered and in a discursive form), change their nature and assume the characteristics of modalities enunciatively.

We also identify the concepts and theoretical choices that allow to plan the activities dedicated to the management of variations and discontinuities which, in their turn, will become enunciated.

Through this path, a series of chaotic and complex contents assume an overall specificity which allows to identify their proper organization: systematic and methodical.

Within this ordering the enunciates are arranged in order to make them individually accessible: in this way we obtain autonomous enunciates, capable of generating relationships between them.

Step 4. Construction of the areas of structured collection of structured enunciates: the process of planning and elaboration of the encode of autonomous enunciates, to which are associated further enunciates and / or information. The formation of the axiom.

A - One or more autonomous enunciates can be harbingers of further information, which are directly related to them and that determine, for example, the dating or geographical location related to the presence of the enunciate itself.

This defines a logical deduction: that the presence of those enunciates in the artifact under examination, finds correspondence even in the identification of important information in charge of establish the dating and the geographical origin of the artifact itself, and thus to generate new enunciates.

This kind of information will be ordered for example inside square brackets, next to the enunciate itself.

Structured enunciates (autonomous enunciates + information contained within square brackets, or image of the enunciate).

B - Another type of structured enunciates, instead, involve the formation of one or more autonomous enunciates which, however, are always represented together within a single context enunciatively. There are autonomous enunciates that form those structured and their characteristic is to "travel" in "group."

It is possible that, within the same axiom, more "groups" of structured enunciates appear (more subsets of the same axiom) that, although sharing some adjacent fields, they exclude one another. This happens because, during the verification of the presence of all the autonomous enunciates that have to appear within the structured enunciate, contradictions emerge.

In other words, more adjacent fields may appear even within an axiom. They may share one or more of the autonomous enunciates that form the structured one but, through their verification, an entire group may be excluded because the correct solution is the one that identifies a set (a compact group).

The reason of the existence of the structured enunciate, in fact, is what it distinguishes it from the autonomous one, and is the fact of implying the presence of a "group" of autonomous enunciates.

Often, a series of structured enunciates that populate an axiom is the characteristic, and therefore identification of a historical period or a localized geographical area: being able to recover and restore these truths, generates new enunciates, proper and relevant to the artifact under examination. This path leads to the recovery of the knowledge of the artifact.

This aspired product derives from the fact that the method according to the invention, has managed the discontinuity during the formation path of the enunciates: the mutations of the iconographic representations of mutations over time and space (see section "limitations of the state of art of the current technique).

But not only :the presence of a plurality of enunciates that allows you to reach the identification of the subject portrayed and the recovery of knowledge, results in the verification regarding the reliability of the results themselves and within a reasonable and aspired validation by the experts.

Structured enunciates = (autonomous enunciates + one or more autonomous enunciates bonded to the first).

C - All enunciates that are part of a subject, for example, the depiction of Bishop Augustine of Ippona, are arranged within its area: "container" that is accommodated within the "record card" which takes the name of the subject: Augustine from Ippona.

The enunciates' ordering of each card is an axiom.

Some examples of formation of enunciates taken from the axiom of the identification card of Bishop Augustine of Ippona:
- Bishop (autonomous enunciate)
- With a child who carries a shell or a spoon, on the seashore in the act of collecting water [from the fifteenth century] (structured enunciate: child + five autonomous enunciates bonded to the first one: shell, spoon, sea, to collect, water) + [the presence of this structured enunciate identifies a historical reference period of the artifact].
- While he heals the eyes [mainly in the German countries] (structured enunciate: heals + eyes) + [the presence of this structured enunciate identifies a geographic area of reference of the artifact].
- Mitre [this enunciate is difficult to recognize, therefore, it is supported by the image that depicts it and its description]:
+ Description: the mitre is the headpiece worn by bishops.

Step 5. Constitution of the area of the "Inscriptions";

In this area, the inscriptions that refer to that iconographic subject are ordered.

They can be words in Latin, Greek, etc.

In this area we consider "autonomous enunciates" even fragments of words, since it is usual to find the inscriptions affixed at the base of the artifact of art. This zone is the one most exposed to damage, especially on account of the fact that moisture, one of the most damaging factors, always drops downwards.

It is for this reason that, not infrequently, the word in its integrity does not appear readable and it becomes necessary to recover its meaning through a partial reading. Fragments of words still visible in the artifact under examination in are compared with the complete sentences (structured enunciates of "Inscriptions" and you will arrive to the original phrase and the deductive recover of the missing letters.

An example:
- Iuste et caste vivere et caritate.

Step 6. Construction of the areas of compatibility of enunciates.

Enunciates do not have their own visible reality, but they achieve it thanks to their ability to relate to others.

This enables them to create relationships enunciatively, in correlation and to make appear structural criteria and concrete concepts, in time and space.

The concrete concepts are the aspired results and generate new enunciates.

The selection of the information, the interpretation of the concepts that are highlighted by the discursive context (reliable sources) or the arrangement of the material and the processes that transform the disordered information in enunciates, constitutes intellectual creation and therefore become part of the claims.

But the intellectual creation materializes not only in the creation of enunciates, because the innovation process that generates them allows to identify also in a set of rules designed to put some order among the discontinuity, that is to say between all enunciates and generating other of them that derive just from the management of the discontinuities.

Currently these last ones are mutually incompatible.

This creates a pattern of order in a succession of sets and subsets, which will determine the areas of compatibility of enunciates: Obligatory schemes of dependencies, order and succession, in which the recurring elements are distributed and that can serve as concepts and establish the matches or mismatches.

We have seen how all the information available about a given work of art is identified and managed until it becomes an enunciate.

This enunciate is predisposed so that it can carry along with itself its characteristics: that is the important information that are elaborated until they assume the properties of further enunciates; that is to say instruments suitable to transform diversity and disorder in homogeneity and order.

All enunciates that refer to the given subject, are ordered into an axiom. It represents the assets of the method according to the invention and it is materially contained inside an appropriate space, for example a storage media, stored in a dedicated area of the identification card of that given "subject" (for example, Augustine from Ippona is a record card inside which also the axiom is present. For the formation of the record card refer to step three "Construction of cards).

Enunciates that populate all the axioms contained within the method according to the invention must relate to each other.

Through its structural criteria, an enunciate constitutes a 'material statute "able to relate to others. Its function is to meet a range of structures and units giving life to relationships enunciatively, in correlation and to make appear structural criteria and concrete concepts, in time and space.

The function of enunciation is the property that all enunciates have of being related to a multiplicity of adjacent fields.

An enunciate has always margins crowded with other enunciates.

This criterion allows the method to "question the story backwards" and to be able to start from an unknown artifact to retrieve its knowledge.

If we suppose that we want to identify a subject depicted in an artifact; of having submitted it to a research through the method according to the invention and that the method has conducted us to the punctual identification of the depicted subject and also to the recovery of some important lost information relevant to it (such as the location of the historical period and geographical area of provenance, & C).

We assume that this is the holy Bishop Augustine from Ippona and we examine this axiom (the set of enunciates contained in it).

We will verify that an axiom is already an overcrowding of enunciates that, thanks to the method, have overcome a first "hierarchic" order: that is to say that they go to populate the record card "Holy" "Bishop" "Augustine from Ippona".

Overcrowding of the adjacent field. Assumptions A.

It is obvious that certain enunciates of an axiom may coincide with those present in other axioms: therefore we will say that these coincidences populate the fields adjacent to it for several possible reasons

Let's make an example.

In the axiom of "Saint", "Augustine from Ippona" the enunciates that are part of the iconographic typology that identify this subject are ordered.

It also includes the variations of representation in time and space and the management of the contradictions.

However, Augustine from Ippona is just one of the 1,250 record cards on "saints" who populate the method according to the invention.

In addition, it is implicit that this "holy" is not even the only "Bishop".

These two enunciates: "Holy" and Bishop "; represent two fields of conjunction that are shared with other record cards. The connection between the record cards is generated thanks to the enunciates present in the axioms that, generate functions enunciatively, and make fields of conjunction emerge. In other words, the enunciates which are common to most record cards will generate some fields of conjunction, that result from the fact of having some enunciates in common.

This process allows to evaluate all possible hypotheses regarding the correct and precise identification of the person depicted in the artifact under examination, as the method according to the invention proposes, with order and logic, all the possible solutions that are to be studied in depth.

The research will be gradual and studied in depth.

It will be completed through verification of coherences and contradictions that are generated by the presence or less within individual axioms, of additional enunciates.

This process will allow us not only to certainly exclude a quantity of record cards, but also to verify the compatibility of further enunciates with Augustine from Ippona, that is, to achieve a gradual, thorough, reasonable and reliable validation about the identification of the expected result. Hereinafter, in fact, we will verify how Augustine from Ippona presents additional enunciates that allow the punctual and unequivocal identification.

The "Holy", "Bishop", "Augustine of Hippo", often are accompanied by a child who is carrying a shell or a spoon. This representation leads to a precise iconographic representation because it refers to the well-known legend according to which that Jesus, or an angel, would have appeared to Augustine while meditating on the mystery of the Holy Trinity. Jesus would have demonstrated to him that the effort to comprehend such mystery is so vain as collecting all the water of the sea in a small pit dug on the beach.

The method of the present invention is able to identify this precise iconographic representation not only identifying the "Saint", "Bishop" "Augustine from Ippona", but also the episode reported to it. Overcrowding of the adjacent field. Hypothesis B.

Let's say that we have come to the identification of Augustine from Ippona.

It is possible that fields of conjunction even within a single record card can be generated.

This happens because the management of the discontinuities inside the method according to the invention represents a repetitive method, so this process is not only generated to refine the research within a broad "discourse" (as that of the "saints"), but it is the repetition of the method itself that creates the preconditions to ensure that this process is repeated and also generated within all subsets. When we have defined the path of the formation of the enunciates, we have seen how, not infrequently, structured enunciates, of different shape and nature, can be generated.

There are sets of autonomous enunciates that form those structured and their characteristic is to "travel" in "group."

It is possible that, within the same axiom, more "groups" of structured enunciates (more subsets of the same axiom) may appear and that, although sharing some adjacent fields, they exclude one another. This happens because, during the verification of the presence of all the autonomous enunciates that must appear within a structured enunciate, contradictions emerge.

In other words, even within an axiom more adjacent fields may appear. They may share one or more of the autonomous enunciates that form the structured one but, through their verification, an entire group may be excluded because the correct solution is the one that identifies a set (a compact group). The reason of the existence of structured enunciates, in fact, and what it distinguishes from the autonomous one, is the fact that it involves the presence of a "group" of autonomous enunciates. Often, a series of structured enunciates that populate an axiom is characteristic, and therefore identifying of a historical period or a localized geographical area: being able to recover and restore these truths, generates new enunciates, and proper and relevant to the artifact under examination. This path translates in the recovery of the knowledge of the artifact.

This aspired product derives from the fact that the method according to the invention, has managed the discontinuity during the process of formation of the enunciates: the mutations of the iconographic representation over time and space (see the section "limitations of the actual state of technique).

But not only: the presence of a plurality of enunciates that allows to reach the identification of the subject portrayed and the recovery of knowledge, results in the verification regarding the reliability of the results themselves and in the reasonable and aspired validation by the experts.

Few examples of execution of the method of the present invention are illustrated below.

### EXAMPLE 1

We have seen in the hypothesis A, as "Augustine from Ippona "is often accompanied by a child who is carrying a shell or a spoon and how this type of iconographic representation leads to a very precise legend.

But Augustine from Ippona can also be depicted according to the passage of the Meditations, in which the Saint declared that he hesitates between Christ's blood and the milk of the Virgin. In these works Augustine is generally represented down on his knees, between the crucifix and the Virgin: drops of blood from the divine sours and drops of Mary's milk fall on his inflamed heart, to signify the two sources (Christ and the Virgin) of his doctrine.

The two iconographic types are both referable to the same axiom, but each group of enunciates is traced to two different subsets: two different episodes of the life of Augustine from Ippona, that cannot be depicted in a single representation.

The repetitiveness of the method allows to manage discontinuities and contradictions (see the following paragraphs: "discontinuity" and "contradictions") and generates further enunciates and the aspired product.

The path to recover and restore the truth (the reason of the existence of the artifact), within the method according to the invention generates new enunciates, which represent the heritage to encode the artifact under examination.

This path results in the recovery of the knowledge of the artifact.

Thanks to the enunciates and their functions enunciatively, the method according to the invention, starting from an unpublished article, will highlight all the enunciates that, while the research is refined and while the contradictions, congruence and coincidences, are managed, it will improve the research leading it to the aspired result.

In order to manage the contradictions and discontinuities, it is necessary to make them ordered and accessible, so that, assuming the form of enunciates, they can represent the essential heritage to obtain the aspired results.

This is just one of the most important innovative content of the method, because it represents a "step forward" and makes the difference between the limit of the known solutions and the method according to the invention.

Today, in fact, the possibility of reaching the correct identification of the person depicted in artifacts is precluded, if their iconographic typology changes over time and / or space and this limit generates a series of "criticalities" that are impossible to manage (see section "Limits of the actual state of technique").

The problem derives from the fact that the limit of the known solutions is directly proportional to the impossibility of managing the discontinuities and to transform them, as the method according to the invention does, in a precious and usable asset: that is in the further knowledge.

This additional knowledge, once it is elaborated and ordered, become other enunciates which converge in the axioms.

The method is able to reach to the correct identification of "'axiom" to which the enunciates present in a plurality of works of art belong to ,and although the system itself attributes the manufactory to different geographical areas and / or temporal, they all depict the same subject: this peculiarity of the method is the prerequisite for a proper and usable storage.

The logical succession of all enunciates related to a work of art, with its discontinuities and contradictions, allows the operator to interact with the same method, so that the research may lead to reliable results and can store all the artifacts based on the subject depicted in them.

As we will see this assumption generates additional aspired products and benefits.

We have seen how the "edges" or the "borders" of enunciates are defined through the "context"; that is, from the set of elements, the situation or the language that motivate a formulation and determine the meaning of the discourse relevant to it.

The associated field exists thanks to the ability of enunciates to establish relations enunciatively.

It is for this reason that the method allows the "dispersed" enunciate, and identified only in the artwork (without knowing its origin), to recover the context of the discourse amenable to it, until the one that belongs to it is identified: to the list of the axioms of the identification card of a particular "subject" (for example, Augustine from Ippona).

The method according to the invention allows to give back to the enunciate its original context; the real one, where it recognizes to belong to: that in which it assumes coherence with the proposition, with the discourse: with the other enunciates that are part of that specific representative content within which forms a complex plot but it proves the veracity and the 'membership.

When multiple enunciates are "returned" to its associated field, they harmonize in a coherent truth which is purified by contradictions. They are "returned" in the series of other formulations to which they originally belonged and within which they enroll.

For example, when we use the method we highlight the enunciates present in the artifact under examination and bring them back to their "discourse"; that is to the context to which they belong to and that today, has been lost due to the passage of time has been lost.

In the course of this research it is as if, long ago, we had opened several boxes of different "puzzles" formed by hundreds of pieces and we had "mixed" them all together. Suppose also that we had lost many pieces and collected the remaining ones to keep them in a container. Today we have to reorder up those pieces, as they are part of the recovery of a historical path that determines the rediscovery of our origins. We must reconstruct what the images , of which we have no memory, depict and retrieve the meanings that they expressed, but we do not know how to reorder this chaos.

The method of the invention presents itself as the tool that is able to examine the individual pieces that are available: sorts them out, dividing them according to their proper box of membership and through a reliable and coherent comparison, in order to enable us to recover the missing pieces and to reconstruct the image that was portrayed in each of our puzzles.

At this point every piece is sorted and repositioned in its place.

Each piece of the puzzle represents an enunciate present in the artifact of art and the figure of the puzzle is the discourse, that is the answer to the questions: "What did our artifacts depicting?", "Where did they come from?", "From which era? "," What are they? ".

To give back the original context to every enunciates means to come to the correct identification of the artifact itself and the recovery of all the information that results from a correct and proper ordering of those in our possession.

Example: if we begin to understand that our artifact represents a saint and a bishop, while ordering we will also arrive to the name of the Bishop: Augustine from Ippona, to the episode represented, to the era to which it belongs, to the geographical area of provenance and the recovery of other information. Essentially, we will arrive to the answers of the questions and then to the knowledge and the recovery of the lost information.

The benefits that until now have been detected, result from the assumption that all of the disordered information will become enunciates and that any associated field allows to order an enunciate in a series of signs, in a certain context, in a specific representative content: in a complex plot.

The associated field is also constituted by all of the formulations to which it relates and where these can be modified, adapted, repeated and opposed.

The method functions because each enunciate relates to the others, and repeats its processes up to the pursuit of valid responses (after deduction of contradictions).

It represents a set of formulations and its probabilities, ordered according to an approval rating index established through the verification of consequences, compatibility, questions and answers that produce consequences, replies and interactions to the pursuit of a reliable result.

Since its birth the enunciate stands out in the enunciatively field.

Here it assumes a position and a status. Establishes possible relationships with the past and the future. Ever since it is generated in the first field of constitution, and already within its axiom, it begins to generate relations increasingly dense, until it canalizes into the plot of the discourse "art".

Its nature is to generate other enunciates due to the relationships it established.

In fact no free, neutral or independent, enunciate exists because it is always part of a web of relationships in which each has its own identity that distinguishes it.

There is no enunciate that does not presuppose the others (as we have seen from the practical examples) and they all generate around themselves fields of coexistence, effects of series and succession, distribution of functions and roles.

Based on this scenario of enunciatively coexistence, we establish the grammatical rules between the sentences, logical analysis of propositions, metalinguistic relations between the language itself the language that defines the rules or rhetorical relations between groups.

Another aspired product of this method, and also an innovative property, is that all of these relations can be analyzed without knowing from the beginning the specific theme to deal with or its respective field of enunciation.

This feature results in the opportunity of recovering the knowledge, because it means that this method allows to get out of the interlacement of the enunciates that order the knowledge to pass to benefit of the method through an external approach of absolute disorder and "no knowledge".

The method according to the invention, in fact, is usable because it generates the analysis of works of art also starting from the few certain elements that are observed. It becomes more and more reliable to the extent that these phrases have been "enunciated", that is, to the extent that they unfold in an enunciatively field enabling them to success one another, to be ordered, to co-exist and play a role in each relationship with the others.

That is why the method according to the invention allows us to "question history backwards"; because the peculiarities of the method and those of the enunciates are placed as significant units in an area in which they multiply and accumulate generating knowledge.

If a sequence of linguistic elements can be analyzed and treated as an enunciate, it must have an existence and material depth that constitutes its determinations.

The coordinates and the material status of the enunciate are part of its intrinsic characteristics and its identity is sensible to the amendment of the statute to which it belongs; as it happens in sentences or propositions: because the materiality of the signs cannot and must not be indifferent to grammar or logic.

The materiality of the enunciate is important because it is formed of a substance, a support, a place and a date. By changing these factors also the enunciate changes, or generates others.

The problems that may present are the consequences of when we are not able to cope and manage the multitude of difficulties that derive from discontinuities and their different levels.

The role of writing and of the alphabet, however, is to bring order and handle even the discontinuity.

Discontinuities, in fact, are currently the enormous indefinite mass of knowledge and information that refer to the field of Cultural Heritage. But they are of different nature, disordered between them, disjointed, fragmented. They present incidences of interruptions, statute and different nature, they break along the historical and geographical course of belonging, change over time and space. They assume an irrational character, that at the state of the actual technique, eludes any kind of elaboration and ordering and precludes the usability and knowledge and also its global awareness.

Therefore the discontinuities represent the identification of obstacles and its nature, that part of critical issues that, at present, preclude the pursuit of true and reliable results.

It is through order and homogenization of the information that we reach the definition of enunciates. They are shaped during the course of elaboration of the information, but many of them are born or come to light thanks to the identification of discontinuities, which represent a "gap" that has to be filled because, necessarily, from hidden information (through the discontinuity) they become visible information and interpreted according to "the art of comprehension".

It is only then that we can refine the enunciate and not before, because now it is purified from disordered discontinuities that generate more chaos and therefore allows us to understand the vital information.

The detection of discontinuities is fundamental and decisive because they themselves contain the same information and therefore their ordering allows us to acquire further assumptions that, once ordered, become other enunciates and increase the possibility to comprehend.

Pointing out the discontinuities means having a bloodhound that locates and captures them.

In other words, it is true that the enunciates are important, but we need to keep in mind that they carry discontinuities that if not detected or dealt with become missing information that create necessarily a not complete comprehension of the work: an obstacle to knowledge.

Essentially the first phase of the method is very delicate, since we are not in the presence of a mere historicizing in space and time, and of a homogeneity to start from to put order, but we are investigating a complex process that involves the fact of aiming to free "the hound" that can discover and signal discontinuities.

Only then can we structure the enunciate that takes account of it and that translates it into knowledge.. Foucault, in "'archeology of knowledge", has dedicated its attention to this need, and that is the vital importance of research of discontinuity and this invention starts precisely from this intuition that, in the state of the art, is not represented in any method.

Therefore the analysis of the discontinuities, over time and space, represents the first peculiarity of the method according to the invention in addition to the reliability of the information that arises, of the method of ordering over space and time, of the method of homogenization of the same information and, above all, of the complexities , which are expressed in the functions of correlations and interrelations.

All of this generates the language necessary for the comprehension and the subsequent validation phase.

In the process of validation we have the object or the work, which presents itself as complete as possible (for example: with the addition of the discontinuity) and the validation process will have more degrees of freedom to evaluate the quality of the result and, if necessary, repeat the process of analysis concrete and clear.

In other words it becomes a discourse through which as a definition of discourse, improves the comprehension itself: to understand means to talk about something not necessarily agreeing with it, and if we can understand each other, but with no agreement, the result can be treated in the same way as a conflict that later will be repeated and resolved.

The correlations between enunciates are a set of fields that may appear similar or can determine relationships and consequences of various kinds and nature.

The correlations represent the transformation from a rich and diversified set of information and to another set of information as rich and diversified but integrated.

Essentially, the correlations allow us to realize the right integration, as complement to the differentiation, to achieve a function of consciousness that allows us to discover and complete the puzzle; to arrive to a better comprehension.

And it is from here that more discontinuities come to light: when we correlate, when we integrate, and it is here, "hic et nunc", that we will be able to build enunciates that can only be defined just when we reach a perfect balance between differentiation and integration.

Consciousness takes vitality only when there are both components: a rich differentiation built on the basis of well-defined categories and rich of information, and the integration necessary to create those synapses or highways or streets or alleys through which the enunciates necessary for the subsequent elaboration are generated.

It is also to be noted that points of diffraction of the discourse exist and are primarily characterized as points of compatibility and incompatibility.

This means that a plurality of objects, subjects, enunciates and concepts can appear and be repeated in the same discursive formation (for example in the same discursive formation regarding the topic "Saints"), even without being part of a single specific set of enunciates (a simple example: individual enunciates may appear and be repeated in multiple record cards within the discursive formation regarding the topic "saints". Even though in a different context, we can find them as points of compatibility between more saints: for example, the fact that a saint is a "man" with "beard" appears in a list of record cards).

This means that more saints may have in common the same enunciates, but that, within their discursive context and thanks to the properties of the enunciates to relate to each other, they reveal all the compatibility and incompatibility until achieving a refinement of reliable research.

Example: The argument "Saints" is composed of a multiplicity of subsets that, within the application of the method according to the invention, corresponds to 1250 record cards: each record card corresponds to a Saint.
- Each card is formed by the ordering of all the enunciates related to the iconographic representation of that saint: for example Adriano from Nicodemia carries with him the ordering and the coexistence of an axiom that consists of the following types of enunciates:
- Autonomous enunciates, "man", "soldier", "model of a city", etc.;
- Structured enunciates: "accompanied by St Quirino [from the sixteenth century]"; "With a lion crouching down at his feet [more frequently since the sixteenth century]";
- Structured enunciates: "a model of a city" + image;
- Structured enunciates that derive from discontinuity generate new enunciates and allow the system to point out that, from a certain period onwards, some variations in the habit of depicting a saint exist: "the lion crouching down at his feet is more common from the sixteenth century on ". These discontinuities may generate additional enunciates: the artifact under consideration depicts all the enunciates that lead back to the identification of Adriano from Nicodemia (first new enunciate). Moreover, the presence of a lion crouching down at his feet leads the work to an execution posterior to the XVI century (according to the new enunciate). The presence of a "crouching lion" is in conflict with the possibility that the artifact is dated prior to the sixteenth century (the third new enunciate).
- The relations that the enunciates can generate within the system allow to deduce new information: all record cards of saints which contain at least one of the enunciates identified in the artifact that we are examining are subjected to comparison. We have said that every enunciate, through its structural criteria, is a "material statute" able to relate to others. Its function is to meet a range of structures and units giving life to enunciatively relationships, in correlation and can make appear in time and space some structural criteria and concrete concepts (new enunciates).

The record card of each saint contains a single series of enunciates which we will call axioms because, although different, they are all relevant to it.

These enunciates carry with them a baggage of information that arises from the ordering of discontinuities, of points of diffraction, the compatibility and incompatibility of historical, geographical and temporal references as well as any other information relevant to it.

One or more enunciates that populate a record card can occur in other record cards, even if they belong to completely different topics (a lion is an enunciate that can appear in many record cards of Saints, but also among the mythological narratives).

In the discursive formation applied to the rediscovery of the hermeneutics art, it will be implied that the letters of the alphabet appear more than once, but the logic of the method according to the invention will bring back, punctually and in order, to the discursive form that it belongs to(in that circumstance, in that context, to that "subject" or, better, to the response capable of answering to that specific question posed).

A different example: in the Italian language, but mostly in English (and many others), many words are synonymous with different meanings and acquire the appropriate sense when they appear in a discursive context.

Well then, this process of ordering the words give them the "appropriate sense" and is the result of a practice developed "automatically" by our brain without realizing it.

This process appears "obvious" to us because we are used to and also trained to interpret the correct sense of the expressions within a discourse, and because this is a "custom" refined over time and through which human beings can "communicate" and comprehend each other.

We need to start realizing the difficulties when we begin to learn a new language and we are forced to learn new "habits" of a language different from ours.

In some ways the same logic is applied, artificially, by the process of language elaboration of the method according to the invention, where the enunciates assume a logical and appropriate sense when the method leads them back to the context of the discourse to which they belong.

Among the complexities that the method has to deal with, other types of points of diffraction are highlighted.

More incompatible elements that are formed in the same way and starting from the same rules, are characterized as points of equivalence but they form an alternative. For example two saints are depicted with a model of a city in their hands, but one of them is a man and a soldier (Adriano from Nicodemia for example), while the other one is the holy martyr matron of the city of Brescia and carries the model of her city (Afra of Brescia).

The two enunciates form in the same way and even represent the same object: That is the model of a city that both subjects, in the iconographic representation that distinguishes them, both hold in their hands. However, they constitute an alternative destined to refine the research by excluding one of the two (both cannot coexist in the same logic; in the axiom of a subject rather than the other), as the discourse refers to two saints but one is a man and the other is a woman.

Therefore it is evident that the model of a city will still appear in other axioms, phrases and sentences and also generally in the discursive form, but its relevance within a very precise discourse will be identified, confirmed, proven, verified or denied by the system itself.).

From these complexities also the attachment points of a systematization derive.

From those points of connection between enunciates from which each of the elements, at the same time equivalent and incompatible, a coherent series of objects derive, forms of enunciation, concepts: discursive subsets and new enunciates form.

The points of diffraction therefore, unlock a field of possible choices and allow that different architectures, which are mutually exclusive, may appear side by side in succession.

For instance, let's imagine of having "identified" or codified that our artifact depicts Adriano from Nicodemia, since the system has revealed that the whole series of enunciates reported in the artifact are relevant to that discourse.

Vice versa: other record cards of Saints have been "rejected" because, although true that one or more of the enunciates that are the object of our research generated one or more "points of engagement" with other record cards, ("model", "city", "hand "); one or more of the enunciates that are the object of our research were incompatible in the "systematization" of the discourse " Adriano from Nicodemia" (Saint Afra carries in her "hand" the "model" of "a city", but she is a "female").

Moreover, the method according to the invention offers the preconditions so that the research is gradually perfected through a logical path, reliable and verifiable.

The method, indeed, allows us to highlight and compare additional characteristics: as for example the fact that it is a Soldier. Through the method according to the invention we can deepen the research because the enunciates have established relations with each other, enabling the system to propose a number of possible subjects present the characteristics of our discussion.

From this ulterior interaction, verification and comparison of the compatibility between the enunciates in the artifact under exam, and those present in the record cards of the Saints listed by the system (presented in descending order according to the index of probability), we can deepen the investigation of truth until the outcome of the research will not present all the characteristics of compatibility, reliability, logic, relevance, consistency, verification and overlap that produce a suitable result to overcome the validation by experts.

Within the method according to the invention the enunciates have produced a series of attachment points of systematization.

Starting from a series of elements ("Saint", "model", "city" and "soldier"), namely the identification of a series of enunciates, attributable to the differ "Saints", correlations have been established and a logical coexistence of additional enunciates that belong to the same discursive formation: the Saint Adriano from Nicodemia.

From an unpublished artifact, we have identified some "certain" elements depicted in it: "man", "model", "city", "hand".

Within the method according to the invention enunciates have established relations and have produced a number of possible "attachment points" of a systematization; until generating a list of possibilities (a list of possible record cards of subjects).

Interacting with a list of each of these record cards, we have realized that we can integrate the research because, affectively, we highlight the presence of characteristics related to a "soldier".

At this point the method begins to check again the verification of relevance and irrelevances of our enunciates, and it establishes logical coexistence and rejects logical incompatibilities, leading up to the final outcome of the research: Adriano from Nicodemia.

This whole process has to take place because the property of the enunciate is that of making it suitable and compatible or incompatible to meet a range of structures and units that belong to a more precise discourse.

We can describe the enunciate as a unit able to be analyzed and opens or closes a field of possible choices; It allows different architectures to be excluded one another or confirmed and implemented one another, unlocking new questions and new solutions.

Processes and results of the method according to the invention represent a harbinger innovation of aspired products.

In fact, the current limit is to not be able to make "talking" all the combinations of the economy of the discursive constellation to which every single discourse belongs, and also between different discourses. This limitation precludes the pursuit of true knowledge, because it cannot arise from the possibility of comparison, the highlighting of the questions and their solution.

This concept is reaffirmed by Foucault, who explains how, in a formal system, also other discourses may constitute applications for different semantic fields; furthermore a concrete model can and should provide the conditions to place it in communication with other discourse from other levels of abstraction.

Despite the fact that the method according to the invention has to divide, differentiate and delineate any topic to meet the demand of placing order, it claims has the property that each discourse, with its own distinctive ordered and organized characteristics, through the enunciates it can establish a complex set of relationships that allow or exclude the selection of a number of enunciates within a given discourse, it allows conceptual adjustment and placing, enunciatively concatenations, formulations of groups and organization of objects.

For researchers such as Foucault the points of diffraction are the objective theoretical awareness, that not all the possible combinations are realized.

The method according to the invention represents the invention and the functioning of the method in charge of responding to the needs identified by the experts and how and why these combinations are treated; how and why they meet the stated requirements and how, in practice, this method comes to the coexistence of a variety of different discourses that converge towards an economy of the discursive constellation.

Through the identification of the theoretical answers, a functional prototype is created, where the method is "made function" and where discourses constitute applications in different semantic fields. On the base of the realization of a concrete model it is possible to deal with the unexpected and to provide to all the discourses relations of mutual delimitation, but with the same level of abstraction. The goal, to ensure that the method is enhanced, integrated and implemented, is to generate a grammar of art that speaks one language.

The method defines the formation system of the different strategies that are realized in it and then generates the discursive formation. This last, since it is practiced through a tangible method, testifies how, despite the extreme diversity and dispersion of information over time and space, it is really possible to reconstruct a mechanism of relations.

The categories are the division in sectors of the indefinite mass of knowledge and information that refer to the Cultural Heritage sector and through the method according to the invention are submitted to a logical inductive, deductive and empirical process.

Each category has its own constituent fields, within which a variety of sets and related subsets of enunciates coexist.

The enunciates of each category are already live of " a life of its own" because they are able to generate relations within their proper enunciatively fields and therefore are also able to produce new enunciates within their own "discourse" (the iconographic, archival, chemical, documentary and illustrative discourse). That is, they are able to formulate questions and produce reliable answers.

The whole set of categories, with its sets and relevant subsets, form the discourse "art".

The information that generate enunciates within the different constituent fields are between them absolutely different (and it is also for this reason that, until today, it has not been possible to be able to place them in relation to each other), but when they become enunciates they assume enunciatively properties and therefore can "communicate" with each other and produce more new enunciates: the aspired product.

In the phases that follow you will meet a list of "categories", each of which comprises over series of information.

Within the constituent fields this information transforms into enunciates.

The categories, with its constituent fields, are like many containers inside which the information is divided in a hierarchical manner and according to the rules of the method.

The choice of the containers and their contents will be amply illustrated within the steps that follow. This takes place according to an inductive, deductive and empirical logic proper of each constituent field of which we have perception by summing the examples that follow:
- historical and iconographic information. Subcategories: themes (sacred, profane, etc.);
- Historical archive
- chemistry
- Information of documentary character
- Illustrative

Fields constitutive of categories testify the significant differentiation of nature and structure of the information on which the process of ordering of the method according to the invention is based.

For differential capacity we mean the great richness and variety of information that the method is able to order with the aim to put them in relation; planning a way so that each of them, in their different origins and structures as well as in a variety of categories, become an enunciate.

But once we have obtained the enunciates the work is not yet completed, since they have to be subordinated to certain operating rules.

When each category is self-sufficient, because able to work independently, it is necessary that it becomes conscious, aware and understanding of the others.

Therefore all categories must respond to those rules that enable them to generate correlations.

The innovative contents of the method generate a multitude of new enunciates, which are not complete in itself, since they will also improve the process of the method according to the invention, in a process in constant evolution, verification and validation of the knowledge acquired.

All the enunciates, the identification of coherence between enunciates, axioms, inductive, deductive and empirical concatenations, correlations, compatibility, encodings, consequences, irregularities, verification, validation, new processes, comparisons, models of analysis, languages, concatenations, processes, delineations of sets and subsets, functional relationships, random, analogical, mechanisms of relations between enunciates and between groups of enunciates and events, identification of types of irregularities, of consistency and inconsistency, of comparison and further verification and validation determining the aspired results.

The final stages of the method of the present invention provide a verification step and a step of validation. In these stages all the processes that verify the truthfulness of the contents of the method according to the invention, of the enunciates, of the logical deductive and inductive and empirical processes and of the aspired results that derive, are grouped together. This aspect of the method assumes a crucial importance because only the experts can justify, deny, modify or validate the contents and processes of the method according to the invention.

The enunciates that are validated are, in their turn, "published" within the method and therefore they integrate the old enunciates generating again a logical deductive and inductive and empirical process that, with the new information, it will make others emerge and the process will continue.

It is important to keep in mind that the method according to the invention has been realized in a functional embryo reserved. Some of the aspired results that have derived from the application of this method, have been extensively validated by experts, conferring to the whole method the characteristic of proven reliability.

In this regard, the method according to the invention claims a dedicated scientific committee.

The technical part is presided by a group of illustrious art experts, responsible for verification and validation of the contents and processes of the method.

Another part of the Scientific Committee is dedicated to the security aspect: the monitoring and control of risk factors and the associated plan of safety.

The traceability of Cultural Heritage also represents an indispensable instrument for the struggle against crime: money laundering of illicit funds and evasion. In fact, often these funds are invested in safe haven assets.

### Consequences

The elevated contents of the method according to the invention generate a series of consequences that are identified, elaborated and molded within the system in order to produce results that, as will be apparent from the description of the phases that follow, are varied in nature, uneven and discontinuous and, taken as a unit, they would not be compatible with each other and neither harmonized: therefore could carry consequences with themselves.

Now, with more particular reference to the figures of the accompanying drawings, we will illustrate in detail the operational steps of the method of the present invention. Keep in mind that in all the steps below, for reasons of major clarity, the exemplifications that support the theoretical part of the description of the method refer to examples applied to the iconographic theme (in particular the contents of the first constitutive field of the enunciates).

This choice results from the fact that this theme represents the largest and the most complex and which, for this reason, it lends itself to a better perception and comprehension of the difficulties that are encountered in the phase of realization of the method.

However, an expert of art will understand that the principles of the present invention are easily applicable or adaptable to other examples of artistic assets, such as assets of architectural heritage, literary or even the world of entertainment.

All the logic inherent to the formation and the processes of this issue, represent the theoretical and practical model applied to the other topics, which are also specifically described in Step 2 of the method.

The order of descriptions, patterns of generalization or progressive specification to which all enunciates obey, as well as the temporal or geographical order, are distributed in the linear succession of the enunciates themselves.

At last, the connection between the enunciates of the different constituent fields will be based on correlations.

They will have the function of connecting all enunciates that are part of the method, of general associations, correlations, checks and new enunciates.

### STEP 1

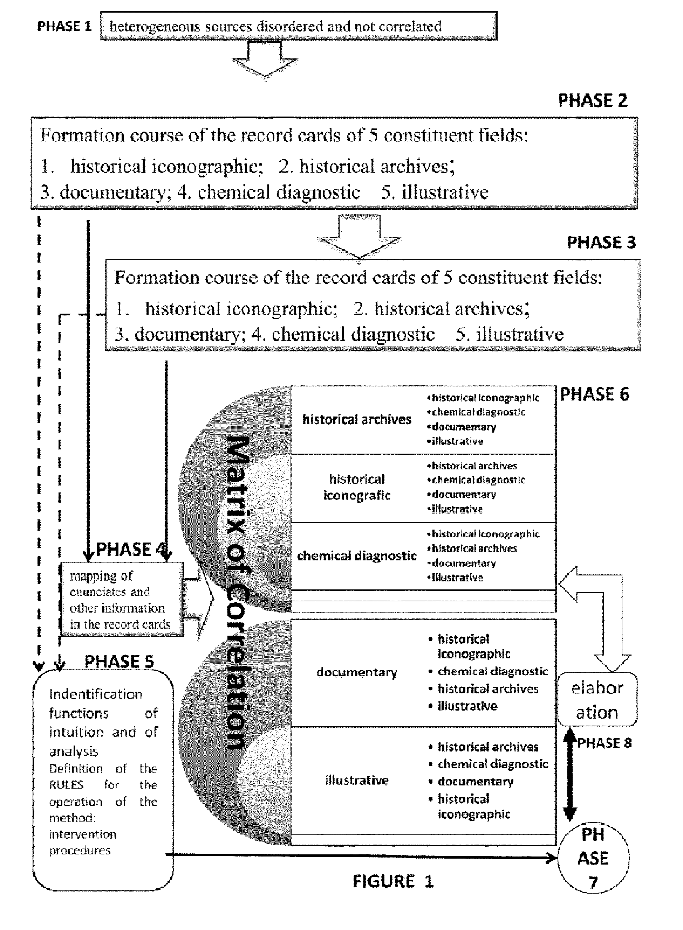

This phase is shown in Figure 1 and concerns the identification of the sources and generation of the input area(see also chapter "formation course of enunciates).

### Description of logical inductive and deductive process

The first step consists in the identification of historical texts and that are reliable within which the information to be extracted is contained and, at the end of phase 1, they will represent for us the input information, meaning all that will be elaborated in order to generate the rough enunciates, that in their turn, may be associated with other information related to them.

These enunciates can be classified in categories and subcategories.

Currently input information are disordered and scattered in a huge amount of text books of various kinds, on the Internet and / or video and / or other multimedia means such as documentaries, and others etc.

They are, of course, very distant from the idea of assuming the form of enunciates, and there is still no knowledge of what they will become.

However, they are scattered inside "discursive" sources and it is possible to identify and track down what their basic structure will become, which through a complex elaboration, will create the enunciates.

Many of these input information can be found in ancient historical texts, and its reliability has been already proven. For example, the Gospels, the Bible, the mythological texts, etc, etc.

With regard to other texts their reliability is evaluated with extreme scrupulosity and it depends on the fact that they have passed the checks of the sector after putting them on the market: or rather the texts themselves have been positively evaluated by the critics and therefore their contents are been "validated".

The hermeneutic interpretation of the author translates into the fundamental reliability of the veracity of the results and therefore it becomes its reference model, helping to ensure that this process assumes the form of certification of the translation.

It is for this reason that we may have more reference models of translation, where it is possible to generate inconsistencies and contradictions and, therefore, several levels of certification..

These contradictions will be part of the process.

This logic of inclusion of the contradictions, is proper of the complexities and characterizes the method through the peculiarities that derive from the fact that it governs them.

The method, in fact, intends to constantly highlight all the contradictions, because this means to deal with them, examine them and understand them.

With regard to the analysis of the authors of the sources, also referring to a translator or interpreter, and in order to certify the reference model, the critical analysis of the authors themselves is fundamental.

This activity represents a process of objective and not subjective analysis; that is all that "independent" information sources make texts and various multimedia sectors available.

In this way, a kind of bibliography of the interpreters is also created, and it is identified in a "access key" for the certification process of the input information.

These access keys related to different interpreters are directly correlated to the texts and to all the successive elaboration of the method.
the identification of the sources is crucial because within these texts the effective logical inductive and deductive research will begin and because the content and information that will be selected will represent our " coding rule" of the asset and that we will come to define as a true "grammar of art."

The latter, as explained below, will determine not only a fundamental and innovative part of the method, but also the aspired product that will be the result of the present invention; because it will restore a series of "certain" elements related to the artifact and to determine their knowledge and its related benefits (for example, it will be possible to correctly identify the subject depicted in the artifact of any era and type of manufacturing, for example: arras, statues , reliquaries, paintings, ancient manuscripts, frescoes, etc., the period and the geographical area of origin, documentary sources, etc.).

The information, once collected through a logical inductive and deductive procedure, even though disordered, will be evaluated according to an empirical criterion.

For this reason their tracing represents a huge amount of work, not only for the difficulties inherent in retracing them, but also because the sources need to be necessarily proven and reliable.

The nature of the information that have to be located and verified are well-divided according to the following topics or sectors of input: historical and iconographic, historical archival, chemical, documentary, inscriptions and images.

The input information is the fundamental part of the method, because if it is not traced, identified and selected wisely and sensibly, the method will not work.

At the end of Phase 1 we will have a heterogeneous and complex amount of information identified and collected but still disordered and the result of a selection that has followed a first inductive and deductive logical path and, subsequently, they will be evaluated according to an empirical criterion. The result of this stage represents the input for phase two.

### STEP 2

Always in Figure 1, it is possible to appreciate the ordering of the information (see also chapter "formation course of enunciates).

The second phase begins with a first structural ordering of the tracked information both in step 1 and step 2, this information is specially analyzed and evaluated: that is to say that you obtain the "family of concepts" that derive from step 1 and that represent the result that allows to reconstruct the architecture through a deductive logic.

This logical phase is based, essentially, on the system of extraction of the information, in the acquisition of historical content and their collection, in order to define the "family of concepts".

Therefore, the selection started in step 1, will continue according to an inductive and deductive logic because the nature of the information must be such that, if properly processed, will become enunciates and they will determine the identification of the "subject" depicted in the artifact of art and also all the other information, of various nature or kind, that refer to it.

For example, these latter may arise from the description of a theme or a subject in the narrative texts (Bible, Gospels, Metamorphoses, etc.) but, when they are codified through an empirical method, they become enunciates and assume their related enunciatively functions: the rules for the representation of that theme, and also for the retrieval of the information related to it.

The inductive and deductive logical part only identifies the information and does not complete the processing and comparison of their contents.

In fact it is the subsequent empirical phase that will elaborate the content and will coordinate it; namely it will give a hermeneutic order: that is, applying a language, that can be then used and managed through the method according to the invention.

Step 2 represents the heart of the method because, through its methodical and repetitive processes and utilizing the identified rules to manage the "critical" (which are also repetitive and methodical), all the information, still disordered, are examined and selected again according to their nature.

The aim is to bring order and, therefore, to generate enunciates and conceive and design also the structure suitable to accommodate them to make them usable.

The aspired results represent the outcome of the analysis; the object of the verification and validation by the experts, because they will have to implement again the method and regenerate constantly all the processes (see the chart).

All the information, already from the step 1, is selected according to its extraction and, coherently with the needs of order which regulate the whole functioning of the method, will form a series of sets and subsets: but all of them will share the same structural criteria adopted by the method according to the invention.

The first assemblies, the more "capacious" "containers", will be divided into "constituent fields of enunciates": historical iconographic, historical archives, chemical, diagnostic and illustrative. Naturally, below there will be a dedicated space which explains them in detail (see step 2. "Chapter" Formation of the constituent fields of enunciates ").

However, always for reasons of order and clarity, and of the repetitive nature of processes, the present document refers predominantly to a "sample" model: the " historical iconographical constitutive field", which coincides with the most complex one.

The set of "constituent fields" represent the ordering of an immense and diverse amount of information, currently disorganized and not comparable.

By making all enunciates of each constitutive field mutually comparable, the method according to the invention generates the logical sequence of events: a heritage of knowledge currently precluded, which can be verified, validated and, finally, constantly increased and implemented with contents.

Its worth noting that, although this present document takes as reference the historical iconographical information, it is implied that, since the assumption intrinsic in the method of generating continuously repetitive and methodical processes, it is equally obvious that the same processes will be shared also for the elaboration of the information of different nature and that will populate other constituent fields.

Within each constitutive field, information is thoroughly examined, studied, identified and divided according to its nature; in order to structure its ordering.

The latter occurs thanks to a meticulous empirical work, able to analyze the contents: we analyze the data, which is all mixed up, and we try to comprehend the organization.

We also proceed to a first verification of this information, because only starting from a certain order you can aspire that they become so ordered creating the conditions so that they can be coherent among themselves.

The organization of the information of step 2, generates autonomous enunciates (concrete concepts) and structured enunciates (one or more autonomous enunciates + and / or information contained within square brackets, + and / or figures).

The structured enunciate represents an instrument for complex encoding but precious and, as we have seen, it can also be formed by the union of more enunciates.

Not only: the presence of multiple structured enunciates within a single axiom, may determine an alternative; namely, the recovery of objective truth that derives from the management, from the method, of discontinuities created by variations of a particular iconographic type in time and / or space

(See the next chapter: "The management of discontinuities in structured enunciates where sets and subsets of autonomous enunciates that form the "groups" are present. Example that follows " crucifer lamb").

Therefore more structured enunciates, which are part of a same axiom and which carry with them unions (or groups of autonomous enunciates tied together), can generate between them, additional correlations, compatibility and incompatibility and, therefore, can be confirmed and / or excluded by each other.

This process translates into the possibility of refining the research until the aspired results are obtained.

The confirmation of the assertions can be verified through the example that we have already seen and which demonstrates that the method according to the invention is able to establish that two iconographic types (two episodes of the life of the same subject, but also two iconographic types that vary because of discontinuities in time and space), are both attributed to the same axiom. But, despite this fact, each group of enunciates is attributed in its turn to two different subsets: two different episodes of the life of Augustine from Ippona.

Even if they involve the same subject, and therefore belong to the same axiom, the two representations are different and both cannot be depicted in a single representation (repetitive and methodical processes).

Processes deriving from the verification course of the method: requirements identified through the realization of the functional prototype.

Correlations, interactions, synapse: connections that generate relationships and interrelationships.

In the steps of the method we confront concretely and in depth, the problems of the limits of the theory; because the effective realization of the concepts themselves accompanies the theoretical concepts, therefore abstract, which, through an "embryo project", are translated in the practical and material realization of a true functional prototype.

The latter represents the essential instrument able to verify the reliability and validation of the method itself.

The most critical processes of the method are those that deal with the management of discontinuity; and it translates into the path that will transform them into structured enunciates, where there will be sets and subsets of autonomous enunciates that will form the "groups".

These "groups" will generate relationships and interrelationships.

In reality it is obvious that the discontinuities represent most of the "complexity", because many of the limitations of the current state of the art identify in them, to which no one has ever been able to remedy (see Chapter 1. The current state of the art).

The method, although identifying the theoretical solutions responsible to deal with complexities, has made evident that it is virtually impossible to really elaborate all enunciates and to obtain reliable results, without addressing objectively the practical path which certifies the reliability; both of the process as the results themselves.

Furthermore, only through the effective elaboration of the information it is possible to identify the best solutions to ensure that the enunciate assumes a "true" sense and it allows "the definition of rules of use" through a verification process for each "step".

This statement is confirmed by the fact that only a gradual and methodical ordering can deal with what is still in disorder, because the constant verification reveals and locates the demands of additional order which had not been possible to foresee in the situation of initial chaos.

If we enter an environment where everything is in disorder and we have to find a very small object, we should gradually start with patience, to put everything in its place. If we will do our job well, the logical ordering will allow us to easily find everything that still had not been taken into account, but that will be ordered because it generates more chaos. Only then we will also recover what we had lost, and it will be ordered as well.

The concept of the disorder that is not resolved, even if minimum, precludes the pursuing of the need of a methodical and repetitive order: namely the preconditions to generate the aspired product. Previously we have already seen that all enunciates of the method according to the invention are ordered according to a set of rules that aim to provide a certain order, not only among all the information (or "rough enunciates") highlighted and collected in Step 1, but also among the discontinuities (see section 3.9 "discontinuity).

So that not only between all enunciates contained within each "constitutive field" (described below: historical and iconographic, historical archives, chemical, documentary and images); but also between those complex and difficult information to transform into enunciates.

This information, although they should also belong to the constitutive fields, due to their nature they are difficult to order and manage because they present an indefinite mass of irrational and disjointed knowledge; It is characterized by the effects of the interruption, different statute and rule and are mutable over time and space (see paragraph 3.9 "discontinuity" and paragraph 3.11 "Complexity and diffraction points."

Tutti gli enunciati, tra loro attualmente incompatibili, vengono materialmente organizzati secondo uno schema di ordine empirico, in un susseguirsi di insiemi e sottoinsiemi che consentirà di stabilire schemi obbligatori di dipendenze, di ordine e di successioni, nel quale si distribuiscono gli elementi ricorrenti che possono valere come concetti e stabiliscono delle corrispondenze.

Through this process, also the discontinuities transform into a valuable amount of enunciates that become an indispensable heritage and a harbinger of the aspired product currently precluded (See the "enunciates", "Path to the formation of enunciates").

However, to truly achieve this target, we must overcome a series of obstacles and deal with a variety of contingencies.

The organization of enunciates involves the practical planning of their forms of succession and the various disposals of enunciatively series between them:
- Order of inferences: from a proposition accepted as true, that is from our "rough enunciates", you move on to a second proposition: the "autonomous enunciates", which its truth derives from the contents of the first, which is the result and consequence of the action of deduction.

L'inferenza e la conclusione che tratta da un insieme di fatti e di circostanze e che si conclude con l'enunciato; che non e solo la conseguenza delle informazioni che ne attestano le origini, ma anche la veridicità. Gran parte dello studio della logica esplora la validità o non validità delle inferenze e delle sue implicazioni.

An example: an iconographic subject that represents a holy Bishop, will be inferential of the fact that, equally true, the bishop's clothing implies that it can be depicted with the miter and the crosier, which are the most customary objects to distinguish his role as bishop.
- Axioms. The whole organization of the enunciates that may be related to an iconographic subject (a record card that belongs to a "Holy"), including all discontinuities (ordered and elaborated in it in order to become enunciates, the images include in it, etc.) are part of a list of enunciates of different form, structure and nature but constitute an axiom.
- the subsequent implications. Once we have established the rules that give life to "'autonomous enunciate", it acquires its own visible reality, which allows it to create enunciatively relations, correlations and shows in time and space the structural criteria and concrete concepts.

This characteristic, proper of the enunciate, translates into the capacity of combining itself with other information and generating in this way those that are for us the structured enunciates (autonomous enunciates + information contained within square brackets and / or + image that depicts him). Hereinafter we deal with a practical example of how materially are handled the complexities.

In fact it is necessary to emphasize that the content of the method (even those illustrated from now), assume a character of reliability due to the fact that the theoretical concepts have been transformed into practical processes.

This has allowed us to address and resolve the unexpected, proving the adequacy of the solutions through the continuous verification of processes and results obtained during construction.

Even if the invention of the method might serve as the guide for the execution of the solutions, if they remained confined to the mere theory, in reality they would leave unresolved a number of contingencies.
the method according to the invention instead, putting in place the practical phase, has helped to identify the unexpected, to elaborate and verify the suitability of the solutions to solve them, and also in charge of defining the "rules of use".

This decisive experience has allowed to further recognize the nature of the "complexities", to deal with its solutions and also to return back again, to the theoretical phase, to perfection with consciousness the rules and processes of the method itself.

Lets move on to an example, which will illustrate how these contingencies, which interposed between theory and practice, thanks to the realization of the functional prototype of the method according to the invention, have actually been managed: highlighted, addressed and solved.

In "Constitutive field of the enunciates of historical-iconographic nature" encounters the " lamb bearing the cross. "

He appears, for example, in the identification record card of St. John the Baptist and represents a crucial focus of this axiom.

### EXAMPLE 2

How does the structured enunciate of" lamb bearing the cross " form.

In the iconography of St. John the Baptist the lamb bearing the cross (autonomous enunciate) is depicted in a medallion or lying on a book or in the act of pouring his blood in a chalice placed at its feet [the lamb bearing the cross disappears from Eastern iconography after the seventh century] (enunciatively relations and correlations that make appear and highlight structural criteria and concrete concepts that identify a time and a place of belonging, structural criteria and concrete concepts).

To understand how the criticalities and discontinuities have been handled , we need to observe the chart below that represents the material elaboration of a complex series of information and their transformation into enunciates:
"Lamb bearing the cross" = E (enunciate); a (autonomous); 1 (an enunciate of the axiom St. John the Evangelist).
"Lamb bearing the cross" = Ea1
   - Ea1 may not have subsequent implications, or have an X amount ("A-B-C, etc."). Each of these successive implications excludes the others; however it can have its own additional dependences: An; or Bn, Cn, or, (etc.).
   - Going back to our example. L "'lamb bearing the cross" = Ea1 may have three successive implications. Each implication excludes the other two, but brings with it additional dependencies, connected together.
   - A. First subsequent implication of Ea1 (autonomous enunciate 1: "lamb bearing the cross"):
"Lamb bearing the cross" (Ea1) can be depicted with a dependence: "in a medallion" (A1 = autonomous enunciate dependent on Ea1 "in a medallion")
   Ea1 +A1
   or:
   - B. Second subsequent implication of Ea1 (autonomous enunciate 1: "lamb bearing the cross"): "Lamb bearing the cross" (Ea1) can be depicted with two dependences: "posed" (B1) + "on a book "(B2):
   Ea1 + 2B

Or:
- C. Third subsequent implication of Ea1 (autonomous enunciate 1: "lamb bearing the cross"): "Lamb bearing the cross" (Ea1) can be depicted with three dependencies: the act of "pouring" (C1) + "his blood" (C2) + "in a chalice" (C3) + "placed at his feet" (C4): Ea1 + C4
- Demonstration reasoning. In this paragraph we have demonstrated how important it is to refine the method through the practical realization of a functional prototype.

We have demonstrated how this process allows the identification of "criticalities" unpredictable through a "circumscribed" theoretical discourse and, therefore, of how the need to return (from practice) to theory is necessary to make the appropriate as well as conscious improvements.

But from these processes derives another determinant factor: the opportunity to "validate" the processes through demonstrative reasoning.

The method, in fact, allows to compare all the processes and the results of the method according to the invention with the artifact under examination.

This constant verification is an integral part of the method, since it is part of the processes already during the entire path of research of the method according to the invention, and subsequently generates the aspired results.

They, therefore, do not arise only from a theoretical process transposed in a practical one, but also by the constant "validation", repetitive and methodical of all processes, in order to obtain the aspired product (reliable results), to be submitted to the "validation" of the experts.

Therefore the reasoning demonstration are realized through the comparison of enunciates, images and descriptions of the artifacts that they depict.

The reasoning demonstration certify the reliability of the discourse and serve to eliminate what is not relevant to the case that we are examining and / or to add information that are evident and appear coherent.

The coherent information increase the process; They are selected and added to enunciates already present in our research, so that they can enter in the verification process through the method.

All the enunciates, with their different structures, represent the definitions that are managed by the method according to the invention and which determine a series of options.

The structured enunciate, alone, is able to generate solutions and also options.

It is only when we add enunciates that we obtain more information and we can "refine" and improve the research, until we obtain those aspired results that, in turn, will become new enunciates and will implement the method according to the invention.

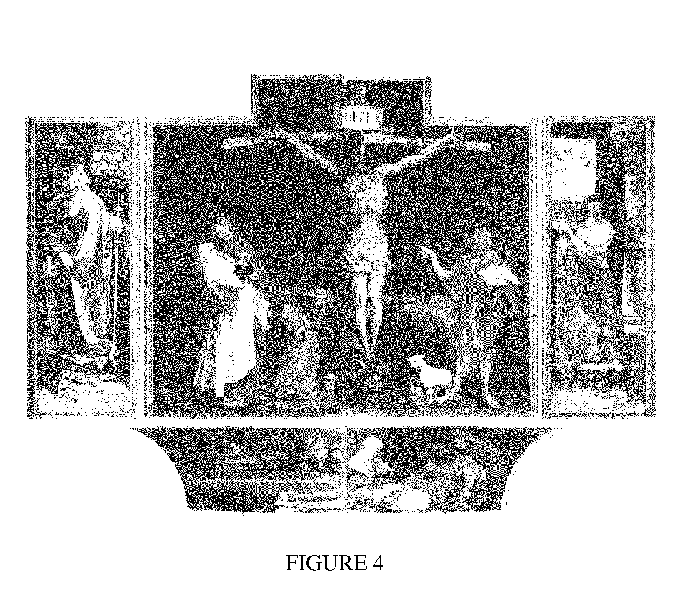

Lets' take a painting as an example:
The Crucifixion handwork of Matthias Grünewald (cm. 269 x cm. 307) situated at the Musée d'Unterlinden, Colmar (1512-1516), shown in Figure 4.

We observe the image and submit it to the path of analysis with the method according to the invention.

The method allows us to comprehend what the artifact depicts: St. John the Baptist

The research process also leads us to identify the presence of the structured enunciate Ea1 + C4, which corresponds to a type of iconography, which refers to a very specific narration and also to identify the historical period of reference: [the lamb bearing the cross disappears from the Eastern iconography after the seventh century].

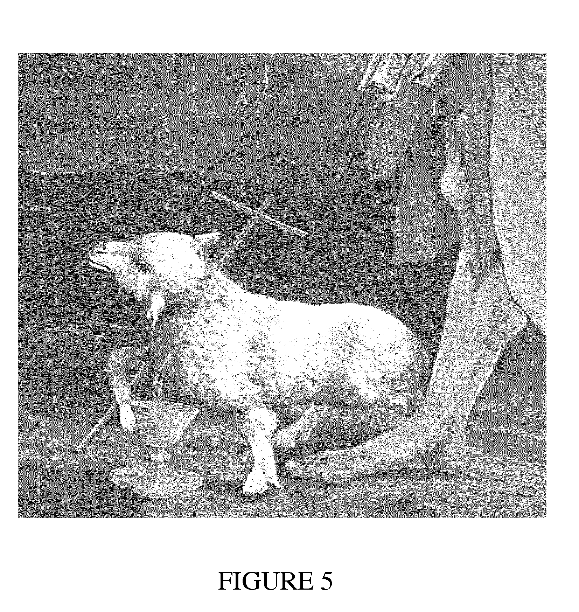

In Figure 5 a photographic representation of a painting depicting a lamb bearing the cross is illustrated.

It is implicit that the method has led us to exclude that in our artifact are present Ea1 + A1 and also Ea1 + B2.

Lets' examine other enunciates that appear in the axiom of our discourse: St. John the Baptist can keep "the index finger raised and leaning forward." We observe again the work of art and verify the actual presence of it. This structured enunciate will implement the research. (see the following chapter: "Constitutive fields of enunciates of historical-iconographic nature", "Constitution process of the enunciates in an identification record card. Illustrative example regarding St. John the Baptist").

The process of continuous investigation and identification of further enunciates, such as those that appear in the axiom of St. John the Baptist and which correspond to the representation depicted in the artifact, represent a refinement and improved research, as well as the confirmation of the accuracy of the processes and also preconditions for a subsequent validation.

Another determinant factor is that we have verified how the method, through its innovative processes, the order, the enunciates, the forms of succession and arrangement of the enunciatively series, among others, it generates an additional aspired product: the possibility of identifying the historical period and geographical origin from which that iconographic typology derives.

This takes place thanks to the fact that every enunciate constitutes a " material statute", able to infer, meet, create connections (more or less stable) and relations (more or less stable); giving rise to a multiplicity of enunciatively relationships that make the retrieval of lost information emerge, with structural criteria and concrete concepts that lead back, unequivocally, the artifact to its own time and / or space of origin: that is generates new enunciates.

These new enunciates can be generated either by the autonomous enunciates, than by the structured ones but, often, they assume a true and proper identity in the different subsequent implications of one or more autonomous enunciates.

As just pointed out the organization of the enunciates also involves different types of dependence of the enunciates themselves, which varies according to their different nature, type and also according to the discontinuity.

Once again, what has been said represents the essential prerequisite to fully understand how it is impossible to describe the functioning of a method and make it reliable, without having materially faced all the obstacles and unforeseen events that are encountered during the elaboration of the material and practical path responsible of realizing the theoretical method.

Therefore it is determinant to reaffirm that it is only through the realization of a functional prototype of the method that it is possible to affirm that all the solutions in charge of making ordered and usable in homogeneities and discontinuities have been faced.

The nodal point, in fact, is identified in the fact that the method according to the invention intends to point out, deal with and manage the "criticalities" that, in the actual state, precisely match with the "limits of the state of the current technique" and with its need to identify appropriate solutions in charge of managing them in their "complexity".

It is only when the enunciates are actually modeled as such and therefore carry with them the properties of order, interaction and interrelation, that it is possible to verify, through a succession of repetitive and methodical processes, and verify if the results the method produces are encountered in the artifact under exam.

The functional prototype also allows you to verify that the enunciates really have enunciatively characteristics that will also create the rhetorical schemes according to which they can be combined in groups of enunciates: essential prerequisite so that they can concatenate together descriptions, deductions and definitions which generate the architecture of a text and, finally, the aspired product, the recovery of knowledge: the encoding of the discourse represented in the artifact of art.

The discourse that generates the method according to the invention derives from the recovery and elaboration of information until it makes them become enunciates (Step 1 and 2); from their practical disposition and from the way in which they are connected together and within specific sets (Step 3); by the way of transcribing what is observed and restoring a perceptive itinerary (Step 1 and 2); from the relationship and the mechanism of subordination between descriptions, articulations of distinctive features, characterization and classification; from the reciprocal position of the general principles and particular observations: enunciates that represent general principles that regulate the identification of a specific topic, as identification data of Saint John the Baptist (Example: - cane of a hermit; - a cross of reed which may produce the words "Ecce Agnus Dei" - honeycomb) or enunciates resulting from the discontinuities (Example: - lamb bearing a cross, depicted in a medallion or lying on top of a book or in the act of pouring his blood in a cup placed at its feet [the lamb bearing the cross disappears from Eastern iconography after the seventh century]; from the system of dependence between what has been learned, what has been deducted, what is admitted as probable, what is postulated.

The aim of the method according to the invention is to generate knowledge that allows to arrive at a discourse and to what is admitted as probable: what is postulated, that is the aspired result foreclosed to the "state of technique": put order and retrieve knowledge even when starting from a condition of "lack of knowledge".

In this sense, the method allows to" question history backwards": starting from a "lack of knowledge" and observing only the artifact, it is possible to track all information related to a work of art and which determines its "objective knowledge ".

To achieve this goal it is necessary to place a series of rules in charge of putting the enunciates in order, giving them a set of obligatory schemes of dependencies, of order and succession in which the recurring elements that can serve as concepts are distributed.

The configuration of an enunciatively field will involve forms of coexistence that delineate a field of belonging: that is all the information that is formulated elsewhere in a disordered and discursive form and that, in the method according to the invention, create enunciates of a discourse, in which they are presented as proven truth and exact description and are constantly exposed to the verification and logic validation, that aims to search for hidden meanings or retrieving those lost ones in time and space, but also to the analysis of errors.

These relations can be explicit because formulated through rough enunciates that derive from information that represent proven truth or implied and involved in ordinary enunciates: that is the result of a complex and articulated process of structuring.

### EXAMPLE 3

Explicit autonomous enunciate: "Bishop" (ordinary enunciate)

Implicit autonomous enunciate: "Bishop" + miter (or mitre: mitre and miter are synonymous) + pastoral (implicit enunciates involved).

In the context of the method according to the invention the fields of conjunction are the grouping of enunciates that refer to an object, but not for this reason they cannot be shared with others.

There may be enunciates concerning fields of objects completely different and that belong to different types of discourses, but they also have an activity among all the other enunciates: whether they represent a analogical confirmation; whether they serve as a general principle and as a precondition accepted and confirmed for an argument; whether they serve as models that can be transferred to other contents; whether they function as a superior application to which we must compare and submit at least some of the propositions that are asserted.

For example the iconographic record card of "Saint Dominic Guzmán" is constituted by a set of enunciates that belong to the description of the various iconographic typologies identifying of this figure.

### A - structured enunciates formed by concomitance fields.

Dominicans: white tunic (like all the canonicals of the twelfth century) + a black cape that ends with a pointed hood

Dominicans: white tunic that falls down to the instep (from 1217) + a black cape or of the color of the cloth or of the color of the sheep from which the wool extracted that ends with a shorter pointed hood. These enunciates, compatible with each other, are groupings that refer to a single object: the fact that we are discussing of Dominicans.

Inside the record card we expect to find an area the origins of the enunciates and the historical context from which they derive are studied in depth: descriptive information that have generated them. Therefore it is necessary to underline that this field, dedicated to the insights, does not contain enunciates but information. The following paragraph is reported as an example:
Dominic Guzmán, the founder of the Order, joined towards the 1198 the chapter of Canons Regular of the cathedral of Osma and wore this first religious garment. The Order of Dominic Guzmán was approved in 1216 by Pope Honorius III and the Preachers took over the vesture brought by their founder. Since 1217 they adopted the rule of St. Augustine and stopped following the form, manner and color of the vesture, which were given for granted. They established that the tunic had to fall down to the instep and that the hood had to be shorter. The consequence of this lack of precision meant that the color uniformity, that was obtained with the white cassock, had not happened for the black hood that, in some convent, kept the color of the cloth received as a gift or from the wool of the sheep from which it derived.

### B - enunciates that derive from the method.

Inside each axiom some enunciates may be generated by the process of the method according to the invention, therefore not only by the information that derives directly from the sources and from their elaboration, but also by a further process of deductive and empirical logic.

These enunciates are in charge of implementing those that go to implement the axiom.

For example, the "miter" of the Bishop, will be the same enunciate of "mitre".

"Mitre" and "miter", will carry along with themselves also the "pastoral" and the "Bishop", because the presence of one is also equivalent to the presence of the other two.

### C - enunciates incompatible with each other.

Enunciates incompatible with each other can occur both within an axiom, that between different axioms.

These assumptions, shared as a common denominator, are the result of methodical and repetitive processes that characterize the method and generate coherence and homogeneity.

The incompatibility may occur during all the processes and also within a single axiom for example:
- One or more enunciates of an axiom can be mutually compatible, but some other enunciates or subsets, can make the incompatibility emerge because a subject (the record card of a saint with its axiom), can be depicted in more iconographic typologies, but one excludes the other.

For example. Different episodes of the same life of the same Saint could have enunciates in common (the Dominican garment), but they may also present enunciates that lead back to a specific episode and exclude another: the saint depicted while begging rather than during his martyrdom. Or variations of representations over time and space can occur (and other similar situations arising from the management of discontinuity).

### C - enunciates attributable to several axioms.

It is an integral part of the process the fact that the method (through repetitive and methodical processes), highlights enunciates incompatible between different axioms.

This process results in the improvement of the research itself, which allows us to exclude irrelevant alternatives and to verify the congruence that will lead to the identification of the axiom relevant to the artifact that we are examining.

For example, two Saints, despite the fact of having in common that they are both Dominicans, it is implied that they will present some enunciates that lead back only to one of the two, excluding the other:
- Saint Dominic Guzman (- with a star on the forehead, on the chest, on the side or above the aureole - with a lily in his hand [starting from the early fourteenth century]; - with a dog [later iconography], - with a flambeau
   rather than
- St. Peter Martyr (with a knife or cleaver jabbed in the head, with a wound in the head - with a dagger in the chest).

### And again,

St. Dominic Guzmán is a Dominican. And it is natural that also other saints who belong to the same Order exist and that, therefore, they share some enunciates: for example those that are characterized by the clothing.

In the absence of an ordered and methodical process it would be complicated and often misleading to reach to the identification, correctly and without being led into error, if this Dominican saint is the one actually depicted in the artifact under exam.

The rhetorical scheme of the method according to the invention will come to the correct identification of the subject depicted in the artifact under exam, since it will allow the combination of groups of enunciates and will involve a succession of conflicts and the continuous exclusion of the inconsistencies.

Therefore the method according to the invention foresees to study in depth the "research for truth" among the enunciates contained within each of different axioms which present the coherence of the Dominicans.

The constant verification of compatibility and incompatibility will lead to exclude all the axioms that despite the coherence of the Dominicans' clothing, present other incompatibilities that determine their exclusion, "skimming" the research in order to identify the axiom that presents all the compatibility with the artifact.

In other words in the beginning the system will present a list of subjects who have in common the clothing of the Dominicans, but will allow to deepen the pertinence with the artifact under exam by verifying other enunciates present in each of the axioms.

During this process we will find and face congruencies and also obvious incongruities; witnessed by the presence or non-presence of other enunciates that confirm or exclude certain axioms.

This process will go on until the reasonably and accurate identification of the discourse depicted in the artifact: in our example, the figure of St. Dominic Guzmán.

### EXAMPLE 4

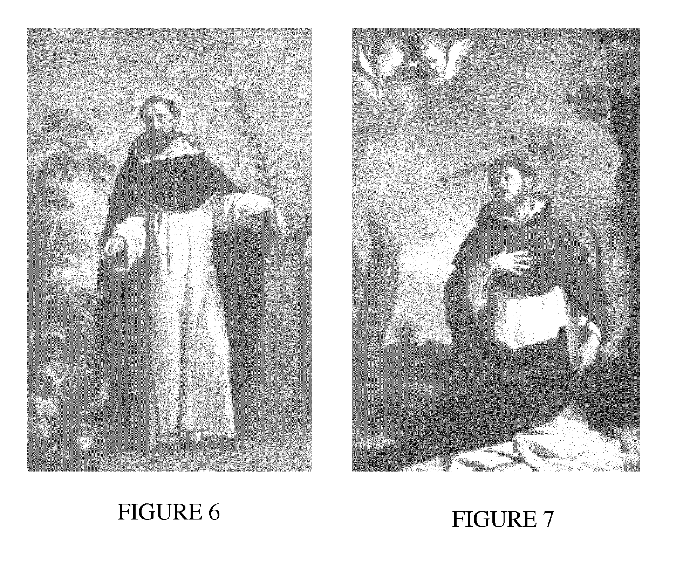

Figure 5 shows a representation of St. Dominic Guzmán; while Figure 6 shows a representation of St. Peter Martyr.

A discourse that depicts a "saint", "Dominican", will imply that the subject itself is accompanied by all enunciates that determine its scheme and objective dependencies.

The methodical and repetitive processes will come one after the other as follows.

In the first place the fact that it is a "saint" will involve the first incongruity with record cards that process other themes; so it will exclude that it may be, for example, of all the other possible subjects referable to a profane theme (it is obvious that an artifact that depicts Daedalus and Icarus will be excluded).

The discourse of a "holy" "Dominican", also indicate a number of possibilities about the deduction, and their probabilities, in charge of formulating who it is: that is, to formulate the most reliable hypothesis about the precise identification of who is the Dominican saint depicted in the artifact.

The nature of this rhetorical scheme will highlight the continuous presence of further conflicts, which pose as certain incongruities. For example compared to all those identifying attributes of a different order (we can exclude that the artifact may portray a saint of the Franciscans order).

The axiom that leads back to the discourse of a Dominican saint, will involve a series of combinations: of dependencies, deductions and also of probability about the period and the geographical origin of the artifact (for example, the identification of his clothing will involve the presence of the distinctive attributes of the order to which they belong: white cassock with a hood and black pointed hood, a leather belt at the waist, the rosary beads hanging from one side of the belt).

Let's examine the fields of concomitance of two saints, both Dominicans: St. Dominic Guzman and St. Peter Martyr.

All enunciates that share a belonging to the Order of the Dominicans coincide in both axioms, which also share the presence of a "book".

However other enunciates that characterize an axiom, distinguish it from the other, enough to determine the exclusion of one of them: St. Peter Martyr is depicted with "a wound on the head procured from the jab of a cleaver" (or knife) inflicted by heretics during the martyrdom; St. Dominic Guzmán, the founder of the Order of the Dominican Preachers Friars (1171/1175 approx), it depicted with the enunciate of the "star on the forehead."

The "wound on the head with the cleaver" and the "star on the forehead" represent a categorical alternative to the identification of St. Peter Martyr rather than St. Dominic Guzmán.

The result of this research has led us to the precise identification of the axiom relevant to the artifact in question.

At this point, as we will see, the method according to the invention will continue to generate its repetitive and methodical processes, comparing this "knowledge" with the enunciates of the other constituent fields described in the following list and that integrate the discourse. Below we will find a brief mention of the extension of the discourse through the harmonization of information that belong to sectors that are completely different but that become coherent with each other thanks to the fact of having assumed the properties of enunciates:
For example all historical archival documents that prove the existence, the commission and the creation of an artifact that depicts St. Dominic are identified; or statements which show that, originally, the Dominican order had no coat of arms but then, in Spain, they began to use a shield partition of white and black. Later, in France and England, a lilied cross decorated with two-tone alternating bands (black and white)was adopted as a symbol. Around the sixteenth century several variations of these coats of arms with the addition of other symbols were realized (dog with the torch, palm, lily, crown), but the two typologies (capped coat of arms and cruciate coat of arms) remained unofficially in use until the twentieth century : only in 1961, in the General Chapter of Bologna, it was decided to officially adopt the capped coat of arm; but already in 1965, in the General Chapter of Bogotá, the right to use them both was granted.

Usually the shields are accompanied by a scroll with the inscriptions of some mottos Veritas or Laudare, benedicere, praedicare ("praise, bless, preach"), used for the first time in the Acts of the General Chapter in Rome in 1656.

The enunciatively functions are the following:
Within the method according to the invention the correlates of the enunciates coexist.

Correlations may assume various forms, more or less evident.

The simplest form is already perceivable in structured enunciates: that is autonomous enunciates accompanied by enunciates that define the preconditions for the localization of the period and the geographical area of belonging of the artifact.

But the concept of correlate of the enunciate, implies all the relations with all that it relates to: what is implicated in its presence, and therefore not only the concept that it expresses, but also all the "range" of possible implications that come with it, what it talks about, its "theme", namely the correlations that allow to determine whether the same enunciate, the phrase and the proposition where it appears have the "contacts" or not with other enunciates.

Correlations represent a fundamental point in the discourse, because they allow to guide the method toward the pursuit of truth increasingly proven and stable; and to identify with reliability of which discourse we are talking about.

The method according to the invention, step by step, leads to the ordering of all enunciates which, dispersed in the global discourse (in each of the containers of the different "constituent fields of enunciates") are tracked, put in relation and correlation making emerge and addressing one by one the discontinuity, the unevenness, the points of diffraction, the congruity and incongruity until the aspired product that generates other enunciates is obtained, not super imposable to those that generated them and defined thanks to the "rules of use".

In other words enunciates which are generated during the course of the method according to the invention are produced in a continuous crescendo: first within each of the "constituent fields of enunciates" and then, again, through their set.

They allow us to understand what the enunciates refer to that have given origin to the process itself (which can be found in the artifact that has to be encoded) and to relate to them all other enunciates that outline their area of truth of the correlations and to establish each thing of the discourse relevant to the artifact: substantially, we have produced knowledge.

The correlate of the enunciate, in the method, the method according to the invention, is a set of fields in which similar objects may appear, and you can define similar relationships (Dominicans: white tunic + a black cape that ends with a pointed hood): this will be for example, a field of objects that possess ascertainable physical properties: historical-iconographic nature, archival, chemical, documentary, inscriptions and illustrations.

It will also be a field where the structured enunciates will be established, with one or more autonomous enunciates accompanied by a spatial and geographical localization with coordinates, distances, relations of proximity and inclusion, or a field of symbolic memberships and secret kinships; it will be a field of objects that exist at the same time and in the same temporal scale in which the enunciate is formed (Example: - lamb bearing a cross, depicted in a medallion or lying on top of a book or in the act of pouring his blood in a chalice placed at his feet [the lamb bearing the cross disappears from Eastern iconography after the seventh century].

An enunciate does not necessarily have to have a correlate, but must have a "referential" established by laws of possibilities, by rules of existence for the present, designated or described, objects and for the relationships that are affirmed or denied.

We can affirm that the levels of enunciates grow with the growth of the process that certifies its "referentiality", determines the location, condition, differentiations, states of things and relationships that are generated, it defines the possibilities of appearance and circumscription of what gives a correct sense to the phrase, to the proposition, to the discourse: to its value of truth.

The enunciates that give origin to the processes are generated within constituent fields.

All enunciates that are fixed within each constitutive field, represent the starting point and what has been already produced, within the method according to the invention, and which will generate a series of further enunciatively events.

All enunciates are "traceable" in the method, which is implemented and evolves directly proportionally to its progressive operating regime.

The enunciatively function is therefore exercised through an associated field, which enhances its properties.

The main condition to define to which kind of grammatical structure the enunciates identified in an artifact of art belong to and also to identify the phrase, or the proposition, or the discourse that identify it, is to know the system of axioms to which they obey to.

To obtain the aspired result we need that those definitions, those rules, those conventions of structure that have allowed the identification of the artifact, join together in an associated field proper of the artifact; which becomes an autonomous subset compared to the identified subject.

For example: the method according to the invention has led us to identify that a given artifact depicts Saint Afra from Brescia, matron of this city, saint and martyr.

The features depicted in the artifact (praying, surrounded by her executioners, her eyes raised to the sky from which two angels descend bringing palm trees. On the ground, at the sides of the saint, there are two bodies are already maimed), lead back to an episode of her life (the martyrdom).

Among the enunciates that have allowed the identification of the Saint, the "model of a city" that Afra holds in her hands no longer appears (as in the example mentioned above), but other enunciates that identify one of the episodes of the life of the same saint.

The enunciates present in the identification record card of Afra from Brescia form the axioms which allow to locate the discourse even if, of course, it is absurd and impossible that all the axioms may be present in every artifact that depicts a discourse.

For example between the enunciates that compose the axiom there are others, which are not present in this example: a veil covers her head, she holds a book and a palm tree (before the sixteenth century), a lion and a leopard at her feet, and others.

In other words it is impossible and it would not make sense to find an artifact where all enunciates that are part of the axiom of the discourse Afra from Brescia are depicted, but this "no coincidence" does not at all preclude that the enunciatively functions may generate the aspired product.

And again: we have said that we would have adduced the example of "Saints", but it is necessary to specify that the associated field where the enunciates that come to a historical iconographical recognition of the artifact are contained, will interface with those present in other associated fields.

So, for example, we will learn that even in Brescia, in a church dedicated to Afra, there is a painting of Paolo Veronese that depicts the scene of torment where Afra prays surrounded by her executioners, her eyes raised to the sky from which two angels descend bringing palm trees. On the ground, at the sides of the Saint, there are the already maimed bodies of Faustino and Jovita.

The comparison with historical documents, images of the two works, etc. will let new enunciates emerge. 1 - Constituent fields of enunciates of historical- iconographic nature.

The information of historical- iconographic nature are those that coincide with the historical modalities of representation of a theme, through which the artist not only has made identifiable the subject depicted in his artifact, but for which, often, he has received a specific rather than strict commission.

Not infrequently the commission, prior to the payment, evaluated the congruity of the representation commissioned to the artist, because it had to respect the "norm" of representation of the treated theme. Lets' just think of the celebration of the mysteries of Christ and the memory of the martyrs, expressed in art through a style and celebratory language real and proper of the liturgy system; where bishops and regional synods intervened by establishing norms and examining the doctrinal correctness of the interpretations of the texts.

Lets' also think of the profane representation, where the theme, mythological for example, had to necessarily and evidently correspond to the textual narrative.

These requirements of representation, although available to all because spread in an infinite amount of historical texts, in phase 1 of the method according to the invention are only retrieved, while, in stage 2, they are opportunely verified, elaborated and organized in a methodical and systematic way.

The information will follow a logical, deductive , inductive and empirical, path until they become enunciates.

The processes arise from the fact that the iconographic norm therefore, through the material of the artifact was in charge of expressing the representation of the theme (describing an event, commemorating a saint, depicting a biblical episode, a historical figure, his acts, his authority, a mythological scene, a historic event as the conquest of a territory or a victory in combat, etc.).

The method of organization of this iconographic information, in this patent represents the instrument to encode the subject depicted in any type of artifact, of art (paintings, frescoes, illuminated manuscripts, tapestries, reliquaries, statues, etc.); in various topics discussed (sacred, mythological, etc.) and in different cultures, religions, periods and geographical areas of reference.

The whole process of use of the method by the user intends to be easy to consult and accessible.

For example, once the enunciates are formed, the most difficult to be identified are flanked by the image that depicts them.

If we look at the representation of a "lion", the "language" will be clear and will not leave space for wrong and misleading interpretation. But if we have to deal with a "ciborium", it will not be easy to identify it, because the correct interpretation of this enunciate depends on the knowledge and the level of preparation of the one who is using the method. How many are able to associate the container of consecrated hosts to the ciborium and recognize its image?

The method according to the invention simplifies and optimizes the process with the help of some images that accompany the textual description of the enunciate.

The latter may be accompanied not only by the information related to it, and that identify it in a specific historical and / or geographical scope, but can also be accompanied by the image that allows its recognition and the related textual description.

(Example a: ciborium + image + textual description (container of consecrated hosts).

(Example b: caduceus + image + textual description (stick with two snakes twined around it).

Process of formation of enunciates of a identification card: the axiom.

An illustrative example of Saint John the Baptist.

The retrieval of the information in phase 1 takes place by examining a variety of texts, within which the information that we will select are of discursive and disordered nature.

Through a logical inductive and deductive approach various kinds of information are traced, identified and gathered and, already from this first phase, precious information derives.

Some of these are listed below:
The saint is usually covered with goat or mutton skin, attached to his shoulder with a buckle and carries the lamb bearing the cross, depicted in a medallion or lying on top of a book or in the act of pouring his blood in a chalice placed at his feet. This representation derives from the words with which the saint greeted Christ who was coming to the Baptism: "Behold, the Lamb of God who takes away the sin of the world."

The lamb bearing the cross disappears from Eastern iconography after the seventh century, after the Second Council in Trullo of Constantinople, who forbade to represent Christ "in specie agni". Sometimes the saint holds only a cross of reed to which is united the writing "Ecce Agnus Dei", or a honeycomb to remember his life as anchorite in the desert. These two objects, in the iconography of the Baptist, replace the stick of the hermit.

Almost always he keeps the index finger raised and leaning forward to signify his mission to proclaim the Messiah.

In the Middle Ages the Saint is usually portrayed as an anchorite in the desert, while in the early Christian period he is also depicted with pastoral or priestly clothes.

In the East he is depicted with an emaciated and haggard aspect, with a long beard and disheveled hair; He is dressed with a short tunic made of camel hair tied at the waist by a leather belt.

The empirical process of phase 2.

Ordering of the information: construction of the axiom.
- Goatskin or mutton skin, attached to the shoulder by a buckle
- Lamb bearing a cross, depicted in a medallion or lying n top of a book or in the act of pouring his blood in a cup placed at his feet [the lamb bearing the cross disappears in Eastern iconography after the seventh century]
- Stick of the hermit
- A cross of reed which may bear the words "Ecce Agnus Dei"
- Honeycomb
- Index finger raised and leaning forward

He is usually portrayed
- As an anchorite in the desert [in the Middle Ages]
- Wearing priestly or pastoral clothes [early Christian]

With an emaciated and haggard aspect, with a long beard and disheveled hair; dressed with a short tunic made of camel hair tied at the waist by a leather belt. [in the East]

The optional "inscriptions" that can be identified and incorporated in the same areas of compatibility can be for example the organization of the writings in Latin, Greek, etc. related to a topic.

For example: «Ecce Agnus Dei».

During the construction of the record cards, as it will be shown in Step 3, there are several fields of population of the information and one of them will host the inscriptions.

The logic through which the inscriptions become enunciates, acknowledges the fact that even the "fragments of words" are considered enunciates.

In fact it is very usual to trace the inscriptions at the bottom of an artifact that, very often, coincides with the area mostly exposed to the worst damage.

This factor, in most cases, coincides with the fact that the humidity, which tends to fall, penalizes exactly the conservation status of the lower areas.

The method according to the invention allows to trace the words even if it has only few fragments, because through its processes, it compares the index of probability of the reconstruction of the word and also of the phrase, generating comparisons with this field of enunciates.

Naturally in the record cards we will also find a discursive field in which all enunciates are fully explained and described, allowing to deepen the concerns and determine the correct choice throughout the path of the research (see step 3: "Construction of Record Cards").

Here we report a brief example.

### Description.

This representation derives from the words with which the saint greeted Christ who was coming to the baptism: "Behold the Lamb of God who takes away the sin of the world." The lamb bearing the cross disappears from Eastern iconography after the seventh century, as a result of the Second Council of Trullo of Constantinople, who forbade to represent Christ "in specie agni".

Sometimes the saint holds only a cross of reed and to which is united the writing "Ecce Agnus Dei", or a honeycomb to remember his life as anchorite in the desert. These two objects, in the iconography of the Baptist, replace the stick of the hermit.

### Enunciates.

### - in specie agni

The result of this process, within the method according to the invention, represents one of the aspired products because the organization of information and its processing, results in enunciates.

The properties of the enunciates will determine the identification of the subject depicted in the artifacts of art placed under examination, their historical and geographical origin, etc.

This process also determines the aspired products which are essential to ensure that the method according to the invention can handle these information within the complex scenario of the invention itself.

### 2 - Constituent fields of enunciates of historical and archival nature

Enunciates of historical and archival nature are those that coincide with the retrieval of information in historical documents. They testify the existence of an artifact, the commissioning and other useful information to be tracked, classified and managed through the method according to the invention for identification, enhancement and traceability of an artifact.

This information, although available to everyone because dislocated in an infinite amount of historical texts, in the method according to the invention they are retrieved, checked, elaborated and organized in a methodical and systematic way.

Such information derives, for example, from "books of accounts" of the artists, where the objects of art commissioned and produced were described, accompanied by the name of the buyer and the price paid, etc.

Or such information derives from texts such as "The Lives" of Vasari, in which the artist himself has documented everything about his career, and also the work of his colleagues.

And again, the information can derive from other sources of various kind and nature, that make it possible to structure a dynamic database capable of identifying, elaborating, managing and making available all those references that can lead to identify the works of art and to place them precisely in a t historical, geographical and artistic scope.

The method includes a particular activity dedicated also to the tracking and cataloging of data related to the artifacts for which the historical information has been traced (we acknowledge the existence), but the good, up to now, has not been identified.

In our example we will discuss of the documents related to the existence of works of art which, although divided in different typologies of manufacturing, identify the subject: Saint Peter Martyr ". From the "Book of accounts of Guercino (1629-1666).

Please note that only from this source, we achieve news regarding the execution of six works depicting "St. Peter Martyr." We quote two:
Description Number 29 - Commission of March 28, 1631. "From Mr Girolamo Angelini dalla Pieue I have received in the income of the Saint Peter made to Mr Co: Ranuzzo from Bologna, half figure, Scudi 25.".

Note: Not identified. See. Malvasia, 1841, II, p. 262, who writes that he was a St. Peter Martyr. For the figure of Girolamo Ranuzzi collector, see R. Carapelli "A lost painting collection from Bologna of the seventeenth century. The painting gallery of the accounts of Ranuzzi, in "the Carrobbio", 1990, pp. 105-111. For payment see the bill 36.

Description number 557 - Commission of June 20, 1660.

"From Molt. R. Pre: Inquisitor, here in Bologna and received 150- ducats for the painting of Christ in agony, and St. Peter Martyr with angel, for a total Scudi: 187.

The coins received were Doble of Italy No: 43 ° and Lit. 5. make these Lit 650-[total] L 750-500. ".

Note: Crucifix with St. Peter Martyr and an angel, Bologna, National Pinacoteca. See. Salerno, 1988 n. 336, p.398 with previous bibliography; Stone, 1991, n. 322, p. 331. For drawings, see Mahon, "Drawings 1969, n. 170-71; Mahon & Turner, n. 132, table 138. For the iconography of this painting v. the sheet 101 "recto" attached on the rear to the register in which, erroneously, they talk of Saint Dominic instead of St. Peter Martyr. "

The result of this process allows to track all the works of which the existence can be traced and to compare the information to ensure that the research converges increasingly towards an improvement. The retrieval of information allows to determine whether it is a lost painting or, if we know the current location to register it, conduct a census, placing it securely through an instrument suitable to follow its "traceability" over time and space.

Example: if we find an unpublished artifact that corresponds to St. Peter Martyr with an angel, when we will store this work, the method according to the invention will allow us to compare also other information that, thanks to their properties of verification, generate further enunciates.

The painting in question corresponds to the "Description number 557 - Commission of June, 20 1660" of the "Book of accounts of Guercino". Thanks to the operation of the iconographic database, the method according to the invention allows us to identify that the image of the saint represented in the unpublished artifact because, since the "cleaver" is present, it corresponds certainly to St. Peter Martyr (first new enunciate).

The system, therefore, has excluded St. Dominic Guzmán (new second enunciate), because it presents the "star".

The verification of this process makes the result reliable and the work of art is stored in the "container" of St. Peter Martyr, where the method according to the invention begins the process to relate this image with those already present in the archive that refer to the works of art of St. Peter Martyr.

At this point the correlation between this work and a drawing emerges (the preparatory sketch). Painting and sketch become a probability of a stable relationship, therefore the system proposes a new enunciate, which represents the correspondence of the unpublished painting + drawing.

The validation of this process is represented by what observed by professor Mahon about the iconography of the design that, as reported in the note, had been erroneously attributed to St. Dominic, while instead it depicts St. Peter Martyr.

Thanks to the method the unpublished painting can be stored according to the correct identification, enabling the system to relate the enunciates, both within each constitutive field, and among all the constituent fields within the method according to the present invention.

### 3 - Constituent fields of enunciates of chemical-diagnostic nature

Ordering the information regarding the chemical nature of the materials and their placement in the precise historical, geographical and artistic scope, with the ability to attribute it to the hand of a painter rather than another, or even a student or a copyist.

Here the logical deductive, inductive and empirical processes manage data related to the materials. For example, almost all the pigments were available only during certain periods and in certain geographical areas. Some of them were very expensive, therefore they are definitely attributable to the hand of a master, and certainly not to the palette of students and copyists.

The same principle is also applicable to other materials that constitute the substance of the work of art. We resume our example.

The outcome of the first investigations have led us to identify the unpublished painting depicting St. Peter Martyr.

We also tracked the documentation in the "Book of accounts of Guercino".

We can now verify the nature of the pigments.

Lets us assume that the work presents a sky painted with blue lapis lazuli pigment and that the grain size (granulometry) of the grinding of colors is rather large.

These two elements will lead to the retrieval of other enunciates related to our artifact: it is a prestigious commission because lapis lazuli were particularly expensive (first enunciate) and the grainy grinding is coherent with the manner of Guercino (According to the new enunciate).

Another example.

We are observing a panel painting attributed to an artist of the fifteenth century, both for the style and the materials. It is a panel of the period and we want to verify that it is authentic.

We perform some diagnostic tests, and we determine that wood is "soft poplar".

The analyzes on pigments determine the presence of a thin underlying layer with "white lead" and a superficial layer where the "zinc white" appears. We also note the presence of "blue of lapis lazuli" finely ground.

Lets' examine the following possible answers.

The enunciates of this specific constitutive field of the method according to the invention, show that the presence of the "zinc white" pigment represents a structured enunciate that brings along with itself the information that it appears on the palettes of artists from 1830 onwards (structured enunciate: - zinc white [from 1830 onwards]).

The presence of this pigment on a panel of the fifteenth century, determines the following possibilities:
A - the underlying layer is covered by a restoration but, once removed, there is no presence of zinc and whites are all made with white lead: from these enunciates we can notice that the work can be authentic
B - the painting is not restored. So in order to assume that the work is authentic, it is necessary to detect also the traces of lead white (in addition to zinc), as this would justify the presence of a restoration work dating from 1830 onwards. This possibility is confirmed or refuted according to whether, under the repainting, even though damaged, a layer of original underneath paint, with lead white, is present (the ancient pigment used by artists to obtain iridescent whites and difficult to find nowadays ).
C - the painting does not present lead white, but only zinc. Although the artifact was painted in the style of the time and on a panel of the fifteenth century, it is probable that the work is a fake.

The enunciates in this constitutive field also highlight other new enunciates.

The presence of blue of lapis lazuli, in this constitutive field of the method according to the invention, is another structured enunciate, since it brings other information with itself and generates new enunciates: it leads back to the original palette of a master and to the fact that the work under examination may be an original (since it is a very expensive pigment, it is uncommon to see it appear on the palette of a student who replicates the work of the master, or a later copy).

Furthermore, the ordering of the enunciates allows us to compare the chemical structure of the pigments reported with that performed on similar works of art and the related information which have already been processed within the method according to the invention and have become enunciates that, from their interaction with the new information that we are verifying, they are still capable of generating new enunciates: determining an important term of reference to compare stylistic congruence and assignment of the artifact to an artist.

The enunciates that have emerged through investigations carried out by the information of this constituent field, can be related with the enunciates of the other constituent fields and further enunciates are generated.

Lets' complete our example.

Through the method according to the invention we can highlight the presence of documents that perfectly describe the unpublished work that we are examining: for example we can identify a description that corresponds to our artifact and which is detected in a passage of the text of "Lives" by Giorgio Vasari who speak of an "unidentified" work described in the life of Giulio Romano (research carried out in the constitutive field of enunciates of documentary nature).

Again through the method according to the invention we can highlight analogies with other works of art, but above all, it is possible that among the images with the characteristics claimed by the enunciates that are available, it is possible to find that our artwork can be "super imposable" to a drawing that depicts the same subject: for example to cardboard with a preparatory drawing coinciding with the work in question and of the same size.

Or it can emerge that we already knew the existence of a late copy of a lost original, mentioned in ancient texts and "unidentified", and many other possible information (research carried out in the constitutive field of enunciates of illustrative).

The set of enunciates generated by the method according to the invention and amenable to our artifact, will be subjected to verification by the experts, to their eventual validation and, finally, to their reintegration within the method according to the invention, implementing the enunciates still present in the method.

The result of this process, within the method according to the invention, represents one of the aspired products because it determines the identification of an original, a copy, a fake, the presence of previous restoration interventions, etc.

### 4 - Constituent fields of enunciates of documentary nature.

The information of documentary nature are those that coincide with the retrieval of seals, monograms and coats of arms that can bring back to the placement of the artifact in a specific historical, geographical and artistic scope.

The ordering of this information follows a logical and empirical criterion to correlate, for example, the monogram of the artist not only with his baptism name and surname, but also with the "nickname" with which he was and is known nowadays (Michelangelo Merisi = Caravaggio = different ways for signature and monograms).

The result of this process, within the method according to the invention, represents one aspired product because it determines an easy identification of elements related to the seal of an artist or to its full signature, then also attributable to the artist, to the historical and geographical origin, etc.

Even this process, also, determines the essential aspired products to ensure that the method according to the invention can handle these information within the complex scenario of the invention itself. 5 - Constituent fields of enunciates of illustrative nature.

Often the information stored in phase 1, correspond to attributes or themes not commonly used and are therefore difficult to interpret. The fifth sector of input is directly connected to the information of historical iconographic nature because it illustrates the figure of the attribute.

The result of this logic and empiric is very important, because it makes the method not only highly usable, but it determines an extreme simplification compared to the state of the present technique.

The tangible results of the method of the present invention are represented not only by the heterogeneous and complex information identified and gathered in step 1, that here are divided and arranged in a methodical and systematic way in order to identify the suitable structure to accommodate them and making them accessible, but such information is ordered, even though not yet usable because they have not been released into their "container".

The discursive information and the enunciates, in their different typologies, within the method according to the invention acquire the rules of formal constitution, rhetorical habits, which allow the internal configuration in a discourse, the relationship of interference between different discourses, even allowing to establish the characterization of a particular period and geographical area.

The method according to the invention allows to delimit groups of diverse concepts until they become ordered, organized and heterogeneous, so as to be defined as a discursive formation thanks to the way in which these different elements are put into relationship between them (for example the technique of rewriting that transforms the information in enunciates; the organization of the field of memory, from the most basic scheme to the general scheme; the method that binds the memory area to the forms of hierarchy and subordination that govern the enunciates; the method that binds approximations and developments of enunciates and the critics referred to them.

The result of this stage represents the input for phase three.

This bundle of reports, which are generated by the relationship and interrelations between the enunciates of the five constituent fields, confers a scientific system of concept formation to the method.

### PHASE 3

Figure 1 always shows a formation and construction course of the record cards that will host all the information and the enunciates of the five constituent fields and the enunciates generated as described in step 2.

Below there is a description of the related logical and empirical process.

Once you understand the information and follow the logical flow, it is necessary to move to step three and build all the record cards that will contain and maintain order throughout all this wealth of information and enunciates.

The construction of the record cards occurs on the basis of the result of step 2, in which the logical and empirical process, through which the enunciates have been elaborated and ordered, has allowed to highlight the requirements and criteria for the construction of the record cards that will accommodate them.

The record cards are organized to perform various grammatical analyzes.

Therefore the sentences are ordered and prescribed through different orders of dependence, which can be identified between the theories of attribution, articulation, designation and derivation.

The record cards are structured in order to be continuously integrated, modified and improved and they contain several fields different between each other because they can accommodate different enunciates and also insights that confirm their authenticity and validation.

Thanks to this structure we obtain a general grammar within which fields of validity are present (with related criteria of reliability of a preposition) and fields of normativity (criteria of integration and exclusion of enunciates relevant to the discourse) and a field of actuality (which includes acquired solutions, it determines the criticism, the issues, it frames the concepts and statements and it integrates, disapproves, keeps them as questions to be solved or it validates them) (see Annex 4 " iconographic record card" and "chart of specific flow" phase 3).

The record cards are merely containers in which we make converge, store, host, increase the mathesis, namely the contents that for the method according to the invention represent the theoretical response, together with the practical demonstration of reliability, accuracy, efficiency and effectiveness to the Cartesian and post-Cartesian algebra and with the project of a general science of order, with the philosophical analysis of representation, with the problems of characterization and of taxonomy: identifying these relationships we can determine the roads that allow the circulation and transfer from one field to another, the changes of concepts, the alteration of their form or the change of their application field.

The grid designs the regular space of their formation.

Also the theoretical schemes of the attributions and its related articulation of the reasons that have conceived them, with related designations and derivations, converge in the record cards.

Below there is a random demonstrative exemplification in which, starting from the regularities intrinsic in the discourse, we describe the conceptual grid.

The record cards, in general grammar of the method according to the invention, will present a complicated network of conceptual compatibility and incompatibility among themselves. All this dense network must obey and report, to the rules that characterize the discursive practice.

Within them different kinds of "fields" are present:
- The first is the one that contains the "key" words: that is the "gaunt" information that represent the "coding norm" and "grammar of art": that is the information that will have to be highly accessible;
- The second is the one that contains the explanations related to the first field, the dynamic archive and other deepening information. These information are exhaustive to clarify any questions, but they don't generate disorder because subordinate to the first and not accessible except through the interaction with the specific record card;
- The third is the one that refers to the inscriptions (words in Latin or Greek, etc.)
- The fourth field is inherent to the bibliography
- The fifth field is the one in which we expect to insert the images at the end of the path of the method itself.

The fields, as well as all the steps of the method, are constantly subject to logical inductive and deductive and also empirical verification.

The concrete result is represented by the record cards relevant to each individual work of art examined and evaluated. The record cards are organized each with its own order: both in the different areas of input, and as specific internal organization, which varies according to the topics that they must contain.

The record cards therefore, strictly follow the general logic of the invention, since they have been generated and shaped according to the nature of the information that they will accommodate, but always following the inductive and deductive and empirical logic proper of the method according to the invention.

At this point, once we have reversed the information inside the record card, they will follow the flow of all the other information, according to the "norm" or the "grammar of art" that will manage its complexity, criticality and process of verification.

### PHASE 4

We have seen the path of formation of enunciates. It represents an essential junction of the method according to the invention: a matrix within which a good part of the claims regarding the intellectual property of the method itself are concentrated.

In step 4, next to the enunciates, also all the amount of contents that will serve as completion, as well as deepening and also as prerequisite of verification and validation of processes and results, will be organized.

Enunciates and information which must constantly accompany them (because attached and connected to them, of various types, nature and utility), are all ordered and reversed within the record cards. Therefore to every sort of contents (information and enunciates of a different nature and structure relating to them), correspond to the specific sections that will host them and create the record cards. Some sections represent the "containers" responsible to maintain general order of enunciates and to preserve them, as well as to increase and further enhance the enunciatively properties through the intervention procedures. The latter represent a further junction of the method, but equally essential (also subject of the claims), because in charge to further enhance the method itself, as will be described in Step 5 and 7.

Other sections are an "incubator" for all the information that may be valuable to generate other enunciates.

The logic of the method, in fact, is precisely to constantly generate enunciates: since they represent the "recovery of knowledge" and result in the aspired product precluded to the state of the present technique.

Therefore the record cards, and their different sections, are the instrument responsible of accommodating materially and objectively the aspired product, which arises both from the order and from the processes of the method according to the invention.

In this "container" all the wealth of information and knowledge is secured.

But its sorting, even though following the repetitive and methodical rigor that regulates all the logic of the method according to the invention, assumes a character of constant flexibility; since it must also lend itself to be constantly "moldable" in order to favor the continuous evolution, implementation and improvement of all the information it contains.

The enunciates, but also the information present in the record cards, must respect two requirements:
A - address the needs of a strict ordering that governs all the method, and maintain order during the implementation over time and space (often being the result of the verification and validation by the experts);
B - ensure the conditions in order to constantly respond to the requirements of usability and its integration processes, verification, development and evolution (all implementations in turn become accessible and then will integrate the knowledge and processes).

In this way the record cards will represent a complete, efficient, accessible and moldable instrument according to each need and requirement.

In stage 4 the results of the previous phases converge: the enunciates, and all the other information that will accompany them, are transferred in the record cards.

As already mentioned, within the record cards there are apposite sections, to which the rules not only of order, but also of dependence to the repetitive and methodical intervention procedures correspond, identified in step 5 and structured in step 7 of the method according to the 'invention.

In figure 8 a schematic view of a summary sheet that represents the result of the execution of the method of the present invention is shown.

### PHASE 5

Intervention procedures of the method.

Both during the process of constitution of the enunciates, and the way of structuring record cards predisposed to host all content to keep them in order; those assumptions of usability that represent a fundamental matrix of the method start more and more defining and are concretely created.

However, simultaneously and also consequently to the path that characterizes all processes of the method (as well as thanks to the fact that the processes of the method are characterized by high innovative content), additional requirements are highlighted, and they are responsible of increasing the potential of the processes themselves.

These intervention procedures, which are also repetitive and methodical, can be considered as an additional matrix, equally fundamental and as an integral part of the method itself.

These are functions in charge of optimizing processes and fill up further the lack of homogeneity of the information.

Identification of functions of intuition and analysis: definition of the rules, namely operating specifications and refinement of the method according to the invention.

Description of the logic and empirical process.

The steps 1-2-3 and 4 have put such an order that the logical, inductive, deductive and empirical process has allowed us to reach step 5.

During the course of process identification of the method and thanks to the practical experience gained through the realization of the functional prototype of the method according to the invention, it has been possible to guess, perceive, identify and become aware of certain analysis functions, original, targeted and specific.

They are an integral part of the method, since they are the result of intuition and intelligence and they help to optimize, simplify and improve processes, also according to repetitive and methodical functions, and to create valuable synergies and benefits.

The specifics of refinement of the method, although achievable through computerized means of various kind and nature, are innovative because they derive from the scientific process proper of the method according to the invention, suitable to improve and make even more useful, all the contents and processes of the method itself.

We have mentioned that all the steps described have a logical flow that through repetitive and methodical processes, lead to a more correct and accurate interpretation; since it is a scientific method and for this reason it can be applied generally to all the themes.

However, the planning of the operational and implementation phases of the method, have enabled us to overcome the scientific theories and come to identify some analysis processes that derive both from the specific nature of the enunciates, and by the fact that they have been organized in a methodical and systematic way.

These intervention procedures can be applied to enunciates and set themselves as partial regulations, capable of managing further critical aspects of the information, their discontinuities and inhomogeneity.

These procedures are not the same for all the discursive information: if we change the nature of the information, their lack of homogeneity and also their discontinuities, the procedures represent the instrument capable of making available all the discursive information discourse between each other and, therefore, all enunciates belonging to each of them.

It is possible to encode these procedures as real rewriting techniques, that is as "linear descriptions within classificatory frameworks which neither have the same laws nor the same configuration of the lists and groups of fixed kinship " throughout history.

These procedures that derive thanks to the highlighting of the discontinuities that accompany all the method according to the invention: from the methods of transcription of the enunciates (information in a "rough" state, molded according to a formalized and artificial language which makes them enunciates); to the ways of translation of quantitative enunciates in qualitative formulations and vice versa (institutions of relations between purely perceptual measurements and descriptions that are purely perceptual); the means used to increase the approximation of the enunciates and improve its perception; the way in which the validity range is once again delimited; the way in which a type of enunciate is transferred from a field of application to another, in a real and proper taxonomy; methods of systematization of proportions (weights); or the methods of redistribution of enunciates already bound to each other, but which are recomposed into a new systematic set.

In this phase we can determine the patterns through which enunciates can be linked together through a further optimization of the method and, therefore, the results of the discourse: we try to identify how the recurrent elements of enunciates may reappear, dissociate, recompose , gain in extension or determination, be incorporated into new logical structures, acquire new semantic concepts, constitute partial organizations among themselves. These schemes allow to describe their dispersion and the fields where they can co-exist, and the rules under which a particular field is subject.

All that has been said generates the ability to make profoundly compatible different systems apparently discontinuous and opposite.

Utilization schemes, rules of use, the constellations within which enunciates can perform a function or a non function and not their strategic virtualities, constitute the fields of stabilization.

Each of these fields can establish a boundary beyond which there is or there is no equivalence and it is necessary to recognize the appearance of a new enunciate.

The realization of the intervention procedures will be described in Step 7 and is divided into the following activities: tree of the topics, guided steps, processes of interaction between record cards and enunciates, synonyms, correlations and weights.

### PHASE 6

Description of the logical and empirical process.

Harmonization of the record cards of the five constituent fields of enunciates.

Processing of the record cards and correlation of the elements of each card with the others: correlations between record cards.

The first "component" of the method has been realized: the path of formation of enunciates is completed and, in step 4, they have been reverted into the record cards that will ensure order and usability of content.

At this point the ordered information are also divided according to the different sections of input (historic-iconographic, archival, chemical, documentary, of illustrative nature and regarding inscriptions) and according to the nature of the topics discussed.

All record cards secure a heritage of enunciates that, taken together, can establish relationships, correlations, generate enunciatively functions and more. Especially now enunciates are ready to handle the complexity, the lack of homogeneity, the points of diffraction: to address and resolve the limitations of the current state of art and to provide a harbinger method of constant implementation and growth of knowledge currently precluded.

We mentioned that, during the formation path of the enunciates, it has been possible to identify some important functions of intuition and analysis, that represent the rules for the operation of the method: the intervention procedures.

Therefore, the following section will show the path of formation of these "rules" that, next to the path of formation of enunciates, represent the two fundamental factors of the repetitive and methodical processes of the method according to the invention.

At this point we have obtained ordered record cards.

The elements, sorted within them, are also coordinated.

Record cards and data are ready for their use.

At this point the method consists in the identification of correlations within each record card and move on to the management of some functions proper of the method according to the invention that derive from the identification of some functions designed thanks to the elaboration of all the previous phases. They represent an additional logical, deductive and inductive and empirical process.

### PHASE 7

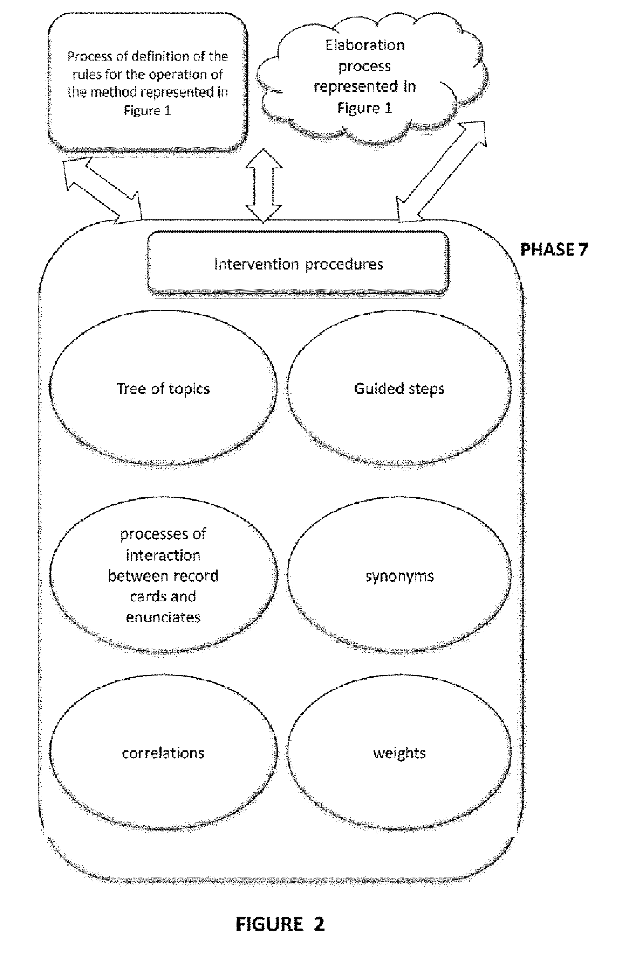

The process of definition of the rules for the operation of the method is represented in Figure 1, but also in Figure 2.

Intervention procedures of Step 8 consists of the practical realization of the functions of intuition and analysis identified in Step 5:
7A - Tree. It is possible to select, within a tree, the specific topic in which you want to search. This selection happens only in the case in which it is able to identify the thematic depicted in the artifact that is being examined. Otherwise the research will involve all enunciates and all constituent fields.

The research means are supported by computer instruments.

This function, although very simple, allows you to exclude a huge amount of record cards.

For example: religious (the Bible, saints, the Virgin Mary, Jesus, & C.) Or profane (metamorphosis, Iliad, Odyssey, & C.). Each part of the tree will bring along a series of subsets.

For example, we select "saints". We can choose whether it is the case of "Saint", "holy", "Angels" and so on.

7B - Guided steps and explanatory images of the enunciates. The method allows to proceed in the research path facing a series of guided steps.

The concept is the same as we have already explained, illustrating the repetitive processes that characterize the entire method and it is methodical because it follows the same logic (See section 3.5 "The processes of the method according to the invention: repetitive and methodical procedures").

In this specific itinerary, it is the system itself that offers the user an easy and guided path that aims to identify the enunciates relevant to his research.

But the guided steps are one of the aspired products that derive from the innovative characteristics of the method itself and from the difficult classification and cataloging of goods: which occurred both during the whole training process of the enunciates and during the identification and elaboration of the functions of intuition and analyzes derived from them.

This procedure, within the method, represents one of the characteristics proper of the method according to the invention, because it is the result of a complex elaboration of the words and enunciates, as well as their combinations, structures and construction of the enunciates themselves; but also of the effects that result from these combinations at various levels: syntagmas and related typologies.

A syntagma, in fact, may be indicative of a single enunciate or a group of enunciates that define a single concept: Head + Complement.

The Head can assume any position on the side of the complement and this characteristic determines an important criterion of classification as its positioning is indicative of the sentence to which it belongs.

In other words the syntagma, whatever is its nature, has a structure which may involve one or more enunciates that refer to the same concept (see section 3.6 "Path of formation of enunciates", paragraph 3.7 "The enunciatively function of enunciates and the associated field "paragraph 3.11" Complexity and points of diffraction "and" Phase 2 of the method ").

The types of attributes, and the related sub-lists, are comparable in successive steps, where a series of enunciates that can lead to a variety of syntax are listed.

A further but decisive simplification of the method derives from the images that, even in the guided steps, appear with the relative description beside the enunciates of difficult interpretation. The user will only have to view the images next to the enunciates and identify the one that corresponds to the artifact that is being examined.

Some examples of guided steps:

### Step 1. Sex: "male", "female", "neutral".

If we select "female", in the next step the system will have already discarded all the saints "males". Step 2: Typology: Benedictine, Augustinian, Camaldolensian, Cistercian, etc.. (having selected "female" the system will not propose all the possible affiliations to enunciates related with "male"). Each mentioned order will be joined by the image that depicts the typology (in this case of the apparel) and the relative explanation and characterization for periods and geographical areas to which they belong..

Other steps. Example: clothing, physical appearance, martyrdom, environment, event, objects, etc. Each step will be accompanied by the relevant images.

Finally we will find a passage dedicated to the "free terms" where we will insert enunciates autonomously.

In this step it is possible to insert also the inscriptions, which will be accepted even if they are fragments of words, since the inscriptions, often placed at the bottom of the artifact, may be damaged and partially unreadable, therefore, the method according to the invention will elaborate even the "fragments of words" in Greek, Latin, etc as enunciates.

7C - Interaction with the user. By starting the research with the method according to the invention it will be possible to propose a list of "solutions" and a decreasing index of reliability of the possible answers.

However, this result represents the first "step" of a process of continuous interaction with the user, which will be repeated until the research is refined and we obtain the expected result: coherent, reliable and trustworthy.

Entering into each record card, in fact, it is possible to interact with its content: implementing, modifying, improving and refining the research itself and, from time to time, also the result.

For example, lets' say that we are able only to highlight that our artifact depicts a "Saint", that he is a "man" and he is also a "Bishop"; but we are not sure of being able to identify additional enunciatively conditions. The method according to the invention allows us to start the research anyway and it will propose us an initial list of possible subjects for which these enunciates have established relations. Entering inside each record card, we will verify its fields of coexistence, implementation, refinement, and deepen and verify our research, in order to obtain the expected result.

Each time we enter within a record card and perform an integration, the method according to the invention will restart the process and the enunciates will establish new relationships, until the completion of the process itself.

7D - Synonyms. The information or "headwords" that, in the history of art, can represent the synonyms for the same attribute, in their path of elaboration that will lead them to become enunciates may confer them their property to be considered as a single term.

It is therefore possible to consider the fact that there is a single enunciate even when we find ourselves facing words, syntax or languages that are not identical.

A given information or the figure of an object, can be transmitted through multiple words, with a simpler syntax or a coordinated code because the information content and the possibility of use are the same.

The field of stabilization of synonyms simplifies processes within the method according to the invention because it permits that more synonyms lead back to the same enunciate.

For example in the Italian language some terms are not synonymous, but in the language of art they lead back to the same enunciate: "ampoule", "ointment pot", "perfume" represent the same enunciate that identifies Mary Magdalene.

Or, more simply, a "candle" can be identified even if it is reported as a "torch", a "candle", or a "flambeau".

7E - Correlations: There are attributes that are related to others, because they represent a "logical" criterion to facilitate the research (see section 3.10 "Correlations").

For example, a "male" will be correlated with all male religious orders, with typical sacred clothing, with the "beard", and so on. A "bishop" will be correlated with "miter" and "pastoral".

This is because if we identify a saint with the Dominican attire, the research will exclude other orders. 7F - Weights. To some "headwords" the system gives greater weight because they are highly characterizing for a more accurate identification of the person depicted.

The syntagmas may confer a different weight in the enunciate: therefore major and minor syntagmas will be distinguished.

The major correspond to those characterized by a linguistic typology able to analyze with greater incidence the grammatical order of the sentence and of the preposition.

Example: the "model of a Church in a hand" will certainly be a enunciate with greater value.

The enunciate is equipped with a certain hierarchy that confers it a greater or lesser importance, a weight relative to the field in which it is placed, that gives it a certain constancy that allows its appearance and utilization in different contexts, which confers to it a temporal and / or geographical persistence and which does not have the inertia of a simple trace, because it generates new enunciates. The materiality of the enunciate, its constancy, the maintenance of its identity through the individual events of the enunciations, its duplications through the identity of forms, generate the field of use in which it is inserted.

While the enunciation may be recognized or recalled, while a form can be ritualized, the enunciate has the distinction of being able to be repeated: but always in limited conditions.

Often the fact that a saint is depicted with a beard occurs. This enunciate is "ritual", but apart from the fact of recalling that this is a saint "male", it does not present characteristics of primary importance. When we speak of a Dominican, each of the enunciates that are part of this subset generate additional enunciates, because they can identify a very specific condition that arises as a contradiction with the others: a multitude of saints may have a beard, but if one of them is Dominican and the others belong to other orders, this creates contradictions which provide to eliminate the other record cards and therefore a logical and reliable refinement of the research occurs.

This field of stabilization will have further simplified all the processes, since the materiality of that enunciate, although repeatable, will be that way only if the subject depicts a Dominican.

This kind of enunciate cannot only be a point of reference; a piece of the puzzle ordered into its original place, but will bring along with itself the statute to which it belongs, and even those to which it cannot belong. It will enter into a grid and will be placed in a field of use within which it will be able to execute transfers or changes (even though he is a Dominican, he is not Saint Dominic but another Dominican) and will integrate within operations and strategies in which his identity is observed or disappears.

In this way the enunciate struggles, highlights or hides, denies or allows to identify a subject, provides a list of possibilities and excludes a further list of contradictions.

In the end it is proper to consider the process of elaboration: namely the process of presentation of the elaborated results.

The result pursued through the steps one through five is that one gets to the timely detection, identification, classification and tracking of the subject represented in the artifact of art and also a certain amount of elements responsible for its enjoyment, appreciation and traceability.

Phase six is an accessory of the method, which optimizes the operation in the context of its overall context.

### PHASE 8

The two matrices of the method are functional and can integrate between themselves and elaborate the processes proper of the method according to the invention: it is possible to generate aspired products.

### PHASE 9

The fruition of the method and the beginning of the process of cataloging of Cultural Heritage: ordered and organized. Assumptions of usability.

Description of the logic and empirical process.

The method is now ready to be applied and to make its content accessible externally.

At this point it is possible to apply the method according to the invention to all the artifacts of art (of any age and type of manufacturing typology, for example: tapestries, statues, reliquaries, paintings, illuminated manuscripts, frescoes, etc.).

Lets' go back to our example on the topic of "Saints".

The method, even if through computer means of various kind and nature, thanks to its innovative content is able to trace all the information concerning the artifact examined.

The method according to the invention will allow us to trace the iconographic attributes of the artifact which, in the method in question, represent the encoding rule because characterizing and identifying of the subject represented.

We will obtain a list of "saints" who are depicted with this iconographic typology.

We enter within the record cards and, by comparison with the information contained in each record card (each one dedicated to a precise saint), we realize that we can implement, modify, improve and refine the information that we have included.

We can also observe if it is the representation of a precise episode of his life.

In a case study on the "Saints", for example, the terms: man, arrow, armor (etc.) shall lead first to a list of subjects that bear those attributes, until the research is completed with the precise identification of San Sebastian.

We have obtained the first aspired product: we have processed the information that has led us to identify the person depicted in the artifact and we have traced all the information related to it.

At this point the logical ,deductive and inductive and empirical process allows us to reverse not only all of this information, but also the image of the same good within the method according to the invention.

The result obtained from step 7 therefore represents the aspired product achieved thanks to the method according to the invention and that now is reversed into this new database for the cataloging of Cultural Heritage.

But this time the identification of the name of the depicted subject allows to catalog the good methodically and with order and thus making it accessible and traceable. In addition the information retrieved and obtained through the application of the method, have determined a number of inductive and deductive processes that, after verification and evaluation of the experts, can lead to the rediscovery and appreciation of the good itself.

All these information are surveyed within a specific record card, inside of which all the information traced on the individual good through the method according to the invention, are organized.

The record card will be finally completed with useful information such, as example, the current location of the object, the diagnostic analysis, property, etc.

The final result is that the good is surveyed forever along with the information related to it, and can even implement and integrate each other further in time, since the method according to the invention plans that the data can be continuously verified and verifiable as directly proportional to the implementation of the Smarticon as well.

That is: as well as all the information proper of the method according to the invention they adopt a criteria of continuous scientific verification (in a global context in continuous evolution), so also the results related to the objects included in it not only share, but also become part of the same verification, development, integration and implementation process.

At this point the availability of the information is complete and the method according to the invention is starting to accommodate an ordered storage of Cultural Heritage.

The method according to the invention is destined to evolve and to expand in direct proportion to the use of the system itself.

These results give life to step 8.

### PHASE 10

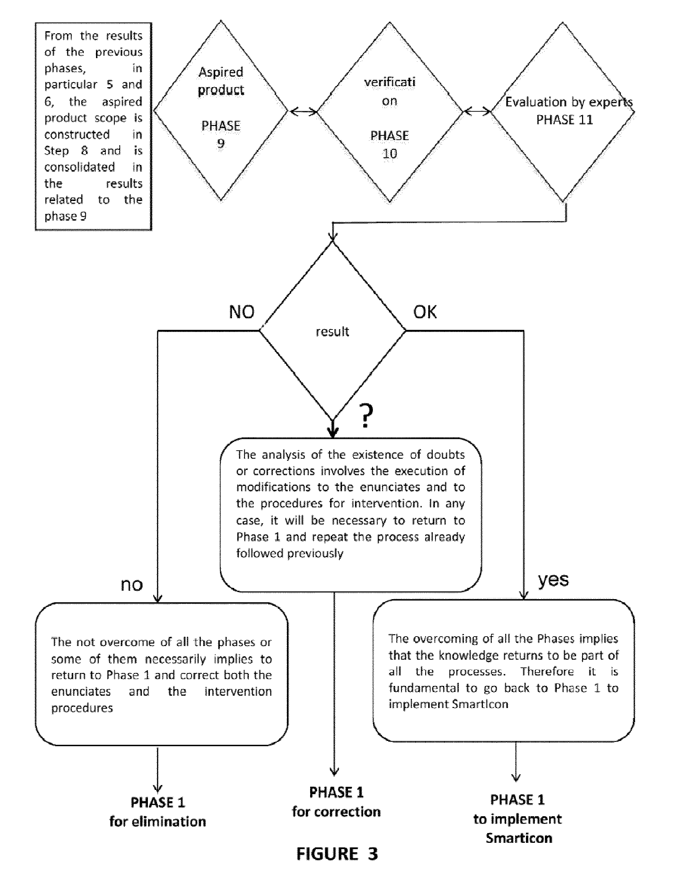

As shown in Figure 3, it is possible to actuate a comparison of the images and assumptions for the final verification.

Description of the logic and empirical process.

The archive process that is achieved through the method according to the invention also establishes its assumptions in the verification process, both logical and empirical, which is the basis of the scientific method itself, as happens in the context of all sectors and disciplines of science: especially the science of art.

From this assumption another aspired product derives, which represents, together with the other steps of the method, a further fundamental point of strength of the method according to the invention; preparatory to bring forth many of the benefits described below.

Specifically, the results of the previous stages have allowed to obtain an instrument storage ordered according to the subject depicted in the artifact.

Within the "container" where the goods are reverted as "subject", there is a further subdivision, which is also developed through the inductive and deductive ,logical and empirical method, where different works are divided according to the different types of manufacturing.

It is important to note that this additional cataloging is not absolutely finalized to divide the manufacturing typologies according to " watertight compartments" but, on the contrary, it still puts order through a further logical and empirical verification.

Specifically, we will find one large "container" within which the stored Cultural Heritage will be ordered by their manufacturing typology and subtype. Some illustrative examples: tapestries, drawings (subtype: sanguine, charcoal, etc.), engravings, prints, paintings (sub-types: on wood, canvas, paper, etc.), frescoes (subtypes: the frescoes on the wall, detachment of frescoes , tear of frescoes, etc.).

The logic of the method according to the invention sorts all these subsets maintaining the relationships between them, in order to obtain the prerequisites for the pursuit of an empirical process dedicated to the recognition of artifacts that, although with different types of manufacturing, are correlated between them.

The information able to determine whether the artifact is a prototype, if it is a copy, if it is a fake, et, will derive.

The result will be the ability to trace stolen works that, in order to be not traceable, have been counterfeited. For example, the theft of a painting on wood can be forged by bringing back the painting on a canvas and thereby exceeding the controls.

Another determinant example: many masterpieces can be traced because their verification allows to "compare data" between a design and a painting, highlighting the possibility that it could represent the sketch for the execution of the artifact. The method according to the invention becomes capable of providing the instrument (the method), able to identify and subsequently to valorize unpublished works since, for example, a work maybe signed, today cannot be correlated to the sketch that the artist has performed to realize it and vice versa.

Think of how many engravings, often signed, may allow to trace the prototype of the artifact, etc.

### PHASE 11

Verification and validation by the experts.

Description of the logical deductive and inductive and empirical process.

This last phase implies the need not only to verify again, especially once the aspired products have been obtained, the nature of the information source, but also to add additional sources of information and, above all, go and verify the interconnections, the correlations, which are already identified in the record cards.

This means to foresee the modification, enhancement of that same information.

At this point a process oriented towards a better understanding will start.

Verification of logic, deductive and inductive and empirical.

Validation by experts.

The result of this phase can also highlight and analyze eventual contradictions, uncertainties and conflicts, that therefore, may lead to a change, an improvement or integration of the method itself.

In this case the process begins again and returns to step 1 to re-examine and reprocess the contradictions highlighted.

Below there is an example of the construction of an iconographic record card that comes from the example for the Saints:

### STRUCTURE OF THE RECORD CARD

### 'TITLE'

Biography. Brief biographical description of the subject discussed in the record card. In this field, the system does not effectuate again the research for the registration on an iconographic basis. Martyrdom. Date of martyrdom. This information provides an important element of dating. Ex: a saint who died in the sixteenth century can not be depicted in the previous century. In this field, the system does not effectuate again the research for the registration on an iconographic basis.

Canonization. This information provides an important element of dating. Ex: a saint canonized in the sixteenth century can not be depicted in the previous century. In addition, often depictions of the saints are commissioned after the date of the canonization and not immediately after their death. In this field, the system does not effectuate again the research for the registration on an iconographic basis.

Iconographic details. In this "field" all the iconographic attributes (and their meanings) are illustrated and explained, with which a particular "subject" (title of the record card) has been portrayed in history. Particular attention is dedicated to those "events" that have determined variations of iconographic representations over time and in different geographical areas. Furthermore, the most historically important works are stored, highlighting those that, as a result of an event (such as a council) or a "representation" (insertion, addition, change in the depiction of an attribute that, from that moment or in that place, becomes customary in the representation of that subject), determine a historical-iconographic element important for the "rediscovery" of the artifact under examination. The database is structured in a dynamic way: the significant works which are relevant for iconographic and historical purposes are cited and also the "unidentified" artifacts, therefore "scattered" over time are mentioned. Also the location of the works of which we known the existance and the current location are stored. This section serves to illustrate "in detail" and exhaustively all the information pertaining to the iconographic data that find themselves structured in schematic form in the database entitled "General iconography" (and the southern, central, northeast, northwest, episodes of life) where the computer system will have to search for information. This information, structured precisely for "keywords" in the fields where the system will have to research, are fully explained in this "field" called "iconographic details" (where the system does not search). The aim is to obtain a focused and simplified process, but also to dispose of the possibility to make a consultation and a exhaustive and in-depth study.

The computer system, by querying the data base for "keywords", will perform a research on well-identifiable data, therefore the data must be "listed" in detail, omitting all those words that can "pollute the demo." Namely this "field" will enable the User to investigate all the information that have determined the process of research. In this field, the system does not effectuate again the research for the registration on an iconographic basis.

General Iconography. In this "field", all the words that refer to iconographic attributes that characterize the subjects depicted (that corresponds to the title of the card) are listed in a targeted way, simplified and schematic. This organization of the information represents a "methodology" of structuring data targeted and precise. In fact, the database thus structured, is likely to be easily interrogated through the computerized search system. The structure of these data, and the computerized system, allow to obtain the "aspired result " compared to the current "state of the art". The database is set up with a structuring of data that lists the attributes for "keywords". These "keywords" have been selected among those who have a very specific meaning in the identification of information that lead back to the iconography of representation of a particular subject. In fact, the computer system is able to identify the subject depicted thanks to the methodology of organization of the data listed in this field. Otherwise all those "key" words that synthesize the iconographic attributes with which that subject, at least once, was depicted are listed here. The record cards, as well as listing in an organized way "keywords" that determine the iconography of a subject (also structured according to the "specifics of functioning" of the "system of research"), foresee that other elements useful for the optimization process are identified, such as the identification of sex: male, female and neutral (where it is not identifiable). Furthermore many "attributes" or "keywords" listed here find correspondence in a database on "synonyms". When one of the attributes is "correlated" in a list of "synonyms", the latter also become part of the process of research. For example: ampoule, jar of ointments, perfume are terms that in art are identifiers of the same "attribute", therefore they are synonymous of the same word and as such will be searched by the computer system, even if the user has entered just one of these terms. The computer system also requires that to each "category" of attributes can be given a "weight". For example, the fact that a saint is "Dominican" must have a decisive "weight" compared to the fact that he is depicted with or without a beard. In this field, the system will make a research, which can be refined by identifying and adding eventual attributes "highlighted" or "suggested" by the research process itself. The user may notice an attribute that had "escaped" at first glance, therefore add it and integrate the research.

The system will update the research process and the relative list of possible results of the "demo": or rather the list of record cards proposed as a result of the "demo" will be updated, ordered by "approval rating" according to the latest update made by the user. The list of record cards start from those where the hundred percent of the selected attributes are present, up to those record cards where only one of the attributes is present. In the count the research system also takes account of synonyms, correlations (a "monk" is correlated with "female") and the weights.

Iconography of southern Italy. Characteristic attributes of the representations in artifacts related to manufacture and commissioning from Southern Italy. The works in which we find the representations from which the list of the attributes of this "field" derive and they are listed in the "field" called "iconographic repertoire of southern Italy." In this "field" the system searches with the same procedure the "field" titled "General Iconography".

Iconography of central Italy. Characteristic attributes of the representations in artifacts related to manufacture and commissioning from Central Italy. The works in which we find the representations from which the list of the attributes of this "field" derive and they are listed in the "field" called "iconographic repertoire of Central".

In this "field" the system searches with the same procedure the "field" titled "General Iconography". Iconography of Italy's north-east. Characteristic attributes of the representations in artifacts related to manufacture and commissioning from Italy's northeast. The works in which we find the representations from which the list of the attributes of this "field" derive and they are listed in the "field" called "iconographic repertoire of Italy's north-east." In this "field" the system searches with the same procedure the "field" titled "General Iconography".

Iconography of Italy's northwest. Characteristic attributes of the representations in artifacts related to manufacture and commissioning from Italy's northwest. The works in which we find the representations from which the list of the attributes of this "field" derive and they are listed in the "field" called "iconographic repertoire of Italy's north-west." In this "field" the system searches with the same procedure the "field" titled "General Iconography".

Inscriptions. In this "field" the system searches even the fragments of words. Not infrequently, the inscriptions on the artifacts are located at the bottom, and this particular area is more subjected to damage caused by moisture, which tends to fall and localize the worst damage in this area.

Episodes from the life of the saint. This field describes the episodes in the life of the subject of the record card. In this "field" the system searches with the same procedure the "field" titled "General Iconography".

Iconographic repertoire of southern Italy. List of works where we find the iconography listed in the "field" "iconography of southern Italy" In this "field" the system does not search.

Iconographic repertoire of central Italy. List of works where we find the iconography listed in the "field" "iconography of central" In this "field" the system does not search.

Iconographic repertoire of Italy's north-east. List of works where we find the iconography listed in the "field" "iconography of Italy's north-east". In this "field" the system does not search.

Iconographic repertoire of Italy's northwest. List of works where we find the iconography listed in the "field" "iconography of northern-west". In this "field" the system does not search.

## Claims

1. Method for the classification and cataloging of goods of value, in particular, works of art, for a subsequent traceability of the asset, the type in which there is an initial stage of access to each individual work to be classified and the collection of information on characteristics of the work, **characterized by** the fact of foreseeing the steps of:
- defining the characteristics of the work under examination as enunciate;
- processing such enunciates to give them an order;
- assigning to each enunciate a classification and / or a category of belonging;
- grouping and merging the enunciates that belong to the same classification and / or category of belonging, with the definition of an axiom;
- defining areas of compatibility of these axioms with further definition of correlations and / or relational pointers between the axioms;
- storing enunciates, axioms and their relational pointers in a storage media accessible by electronic means;
- providing parameters and search computer means or instruments enabling to retrieve automatically information regarding the work of interest.

2. Method according to claim 1 in which before the step of definition of the areas of compatibility, also the collection of images, inscriptions or fragments of enunciates relevant to that given work of art are optionally provided.

3. Method according to claim 1, **characterized by** the fact that such enunciates include at least five constituent fields divided thematically in:
- Historical iconographic;
- Historical archives;
- Documentary;
- Chemical diagnostic;
- Illustrative.

4. Method according to claim 3, **characterized by** the fact that each of such constituent fields may comprise a plurality of sub-categories.

5. Method according to claim 1, **characterized by** the fact that the set of enunciates, axioms and their relational pointers of a given work of art is collected in a record card pertaining to that specific work.

6. Method according to claim 5, **characterized by** the fact that each entry of the record card is individually searchable by means of said computer means.

7. Method according to claim 1, **characterized by** the fact that such enunciates comprise a plurality of fields in each of which it is possible to identify attributes or keywords susceptible to locate information that lead back to data depiction or representation of a particular subject in the work of art.

8. Method according to claim 7, **characterized by** the fact that such attributes or keywords find a correspondence in a database of synonyms.

9. Method according to claim 8, **characterized by** the fact that such synonyms are associated with the content of the fields of the enunciates acting as pointers of a same attribute.

10. Method according to claim 1, **characterized by** the fact that such instruments of research include a structured database according to attributes of the work of art traceable using keywords and their synonyms

11. Method according to claim 10, **characterized by** the fact that in such database a predetermined weight is associated to each attribute which contributes to the recovery of the information by using said computer means.
